(19) Europäisches Patentamt
European Patent Office
Office européen des brevets

(11) **EP 3 569 336 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**04.03.2026 Patentblatt 2026/10**

(45) Hinweis auf die Patenterteilung:
**31.08.2022 Patentblatt 2022/35**

(21) Anmeldenummer: **19167911.7**

(22) Anmeldetag: **08.04.2019**

(51) Internationale Patentklassifikation (IPC):
**B23B 27/16** (2006.01)  **B23B 29/03** (2006.01)
**B23C 5/00** (2006.01)

(52) Gemeinsame Patentklassifikation (CPC):
**B23B 27/16; B23B 29/03; B23C 5/006;**
B23C 2226/27

(54) **ROTATIONSWERKZEUG**

ROTARY TOOL

OUTIL TOURNANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.04.2018 DE 102018108767**
**08.01.2019 DE 102019100298**

(43) Veröffentlichungstag der Anmeldung:
**20.11.2019 Patentblatt 2019/47**

(60) Teilanmeldung:
**22185573.7 / 4 098 386**

(73) Patentinhaber: **Gühring KG**
**72458 Albstadt (DE)**

(72) Erfinder:
• **HÄNLE, Dr. Peter**
**Wales, WI Wisconsin 53183 (US)**
• **BISCHOFF, Thomas**
**88090 Immenstaad (DE)**

(74) Vertreter: **Winter, Brandl - Partnerschaft mbB**
**Alois-Steinecker-Straße 22**
**85354 Freising (DE)**

(56) Entgegenhaltungen:
EP-A1- 1 364 735  EP-A1- 3 135 716
EP-A1- 3 566 802  EP-A2- 0 186 067
WO-A1-2005/025793  WO-A2-2017/177990
CN-A- 107 020 410  DE-A1- 10 305 991
DE-A1- 102007 007 399  DE-A1- 102014 208 130
DE-A1- 102015 112 631  DE-A1- 102017 118 604
DE-B4- 19 852 588  JP-A- 2000 246 519
JP-A- S58 206 305  US-A- 5 605 420
US-A1- 2005 047 883  US-A1- 2010 183 382
US-A1- 2011 188 954  US-A1- 2014 161 543
US-A1- 2015 190 867  US-A1- 2016 074 948

• "Impulse - Neue Produkt-Highlights im MAPAL Werkzeugprogramm", MAPAL, 1 December 2011 (2011-12-01), XP093119027, [retrieved on 20240112]
• "Impulse (Praxis Report)", MAPAL, 1 September 2002 (2002-09-01), XP093119032, [retrieved on 20240112]
• Wikipedia: Sonnenschirm
• AN-T Transmission Prismatic Tooling, 14.08.2014

EP 3 569 336 B2

## Beschreibung

### Technisches Gebiet

Die Erfindung betrifft ein Rotationswerkzeug / rotierendes Werkzeug, beispielsweise in Form einer Reibahle oder einer Stufenreibahle, zur spanenden Bearbeitung von großen Innendurchmessern, an dessen Außenumfang zumindest eine Schneide angeordnet ist, mit einer Trägerstruktur, die die zumindest eine Schneide mittelbar oder unmittelbar trägt, und mit einem Spannabschnitt zur Ankopplung an eine Werkzeugaufnahme. Der Spannabschnitt kann dabei beliebig geformt sein, vorzugsweise eine solche Form haben, dass er über gängige Werkzeugaufnahmen, wie beispielsweise eine HSK-Aufnahme (Hohlschaftkegel-Aufnahme), an die entsprechende Spindel einer Werkzeugmaschine gekoppelt werden kann.

### Stand der Technik

Insbesondere durch den Umstand, dass immer mehr elektromotorische Antriebe oder konventionelle Getriebe mit höherer Gangzahl benötigt werden, stellt sich verschärft das Problem, große Innendurchmesser, wie beispielsweise den Innendurchmesser eines Statorgehäuses eines Elektromotors, spanabhebend mit hoher Präzision zu bearbeiten. Die hier eingesetzten Bearbeitungswerkzeuge müssen formstabil und dennoch gut handhabbar sein. Insbesondere muss das Werkzeug auch von einem automatischen Werkzeugwechsler einer Bearbeitungsmaschine sicher gehandhabt werden können.

Für den Wirkungsgrad eines Elektromotors ist aufgrund der Wechselwirkungen zwischen Rotor und Stator eine genaue Einhaltung vorgegebener geometrischer Maße von entscheidender Bedeutung. Da das Bearbeitungswerkzeug für Bearbeitung von großen Innendurchmessern ein beträchtliches Volumen erhält, muss beachtet werden, dass sich das Gewicht des Rotationswerkzeugs nicht negativ auf die Maßhaltigkeit der Bearbeitung auswirkt. Auch soll eine Herstellung mit verfügbaren Materialien wirtschaftlich noch realisierbar sein.

US 2011/0188954 A1 offenbart ein Aufbohrwerkzeug mit einem Grundkörper, der eine Schnittstelle zu einem Antrieb aufweist. An dem Werkzeuggrundkörper sind Schneidplattenhalter befestigt, die in radialer Richtung zwischen zwei Positionen bewegt werden können. Hierbei kann der Werkzeuggrundkörper in Form eines Rades gestaltet sein.

US 2010/0183382 A1 offenbart ein rotierendes Spanwerkzeug, welches eine hammerartige Form aufweist. Dabei liegen sich zwei Schneidabschnitte diametral gegenüber.

DE 10 2017 118 604 A1 offenbart ein rundlaufendes Werkzeug, welches einen Werkzeugkopf mit einer umfangsseitigen Schneidkante sowie einen Werkzeugkopfträger mit zylindrischem Schaft aufweist.

US 2015/0190867 A1 offenbart ein Planfräswerkzeug für eine spanende Bearbeitung mit einem Werkzeugkörper und einem Schneideinsatz, wobei eine Freifläche in einer seitlichen Draufsicht gesehen unter einem stumpfen inneren Winkel bezüglich einer oberen Erstreckungsebene ausgebildet ist.

US 2014/0161543 A1 offenbart einen Fräser mit einer zentralen Nabe und daran angebundenen Speichen, welche die Nabe mit einem radial außenliegenden Schneidrahmen, der umfänglich Schneiden aufweist, verbinden. Jede Speiche ist gegenüber der benachbarten Speiche durch eine Öffnung getrennt und weist einen polygonalen Querschnitt auf.

### Zusammenfassung der Erfindung

Es ist daher die Aufgabe der Erfindung, ein Rotationswerkzeug insbesondere für die spanabhebende Herstellung von Bohrungen großer Durchmesser zur Verfügung zu stellen, das sich durch eine sehr gute Handhabung auszeichnet, so dass bei einer Bearbeitung eine Einhaltung der Maßhaltigkeit der Bohrung sichergestellt ist. Dieses Rotationswerkzeug soll zudem kostengünstig herstellbar sein und dennoch den Anforderungen einer hohen mechanischen Belastbarkeit gewachsen sein.

Die Aufgabe wird bei einem gattungsgemäßen Rotationswerkzeug erfindungsgemäß dadurch gelöst, dass sich die Trägerstruktur ausgehend von einem dem Spannabschnitt benachbarten Kopplungsabschnitt schirmartig aufweitet/erweitert und durch eine Versteifungsstruktur radial versteift ist. Durch die schirmartige Aufweitung der Trägerstruktur kann einerseits eine gute Drehmomentübertragung von dem Spannabschnitt auf die Trägerstruktur sichergestellt und andererseits das Rotationswerkzeug in Leicht-Bauweise konstruiert sowie kostengünstig und einfach hergestellt werden. Das zur Verfügung gestellte Rotationswerkzeug ist damit so gestaltet, dass das für seinen Aufbau benötigte Material möglichst klein ist. Die "Hauptfunktion" der spanenden Bearbeitung übernimmt die Trägerstruktur, wobei von dem Spannabschnitt ausgehend das Drehmoment bzw. die Kraft in die Trägerstruktur eingeleitet wird, wohingegen die Versteifungsstruktur eine "Nebenaufgabe" erfüllt und die Trägerstruktur in radialer Richtung versteift, so dass die zumindest eine Schneiden an dem Außenumfang des Rotationswerkzeugs in radialer Richtung gestützt wird. Durch die schirmartige Aufweitung kann aufgrund eines hohen Abstandes der Trägerstruktur von einer Rotationsachse des Rotationswerkzeugs ein entsprechend großes Torsionswiderstandsmoment der Trägerstruktur und damit des Rotationswerkzeugs gestaltet werden. Es ergibt sich durch die schirmartige Aufweitung ein radial innenliegender Bereich bzw. Volumen des Rotationswerkzeugs, welches, wie oben geschrieben, außerhalb der Drehmomentübertragung des Rotationswerkzeugs liegt. Dieses außerhalb der Kraftübertragung gelegene "frei verfügbare" Volumen ermöglicht es, eine Versteifungsstruktur in das Rotationswerkzeug mit zu integrieren, welche die Trägerstruktur in radialer Richtung versteift, jedoch das Gesamtgewicht des Werkzeugs nur unwesentlich erhöht. Durch das geringe resultierende Gewicht des Rotationswerkzeugs, ist das Rotationswerkzeug selbst dann, wenn es eine erhebliche axiale Länge erfordert, weitaus besser handhabbar als es nach dem Stand der Technik der Fall ist. Damit einhergehend verringern sich dynamische Unwuchtkräfte und gewichtsbedingte Durchbiegungen des Rotationswerkzeugs, wodurch die Arbeitsgenauigkeit wesentlich angehoben wird.

Die Trägerstruktur weist dabei zumindest zwei in Bezug auf eine Rotationsachse des Rotationswerkzeugs diametral gegenüberliegende Trägerabschnitte auf, die jeweils zumindest eine Schneide mittelbar oder unmittelbar tragen und die die Versteifungsstruktur miteinander verbindet. Das Rotationswerkzeug weist also radial außen zwei sich gegenüberliegende Schneiden tragende Trägerabschnitte auf, welche durch die im Wesentlichen radial innenliegende Versteifungsstruktur miteinander verbunden sind. Während, wie oben beschrieben, die Trägerabschnitte das Tragen der Schneiden zur Aufgabe haben und gewissermaßen den Funktionsabschnitt des Rotationswerkzeugs zur spanenden Bearbeitung realisieren, ist die Aufgabe der Versteifungsstruktur eine steife Verbindung der beiden Trägerabschnitte miteinander und mit dem Spannabschnitt zu schaffen. Durch die sich diametral gegenüberliegenden Trägerabschnitte kann eine durch die Bearbeitung auftretende Kraft von dem einen Trägerabschnitt über die Versteifungsstruktur auf den anderen Trägerabschnitt übertragen werden und vice versa, so dass sich die beiden Trägerabschnitte gegeneinander stützen.

Die Versteifungsstruktur ist in Form eines Zug-/Druck-Strebengerüsts ausgebildet. Die Versteifungsstruktur in Form des Zug-Druck-Strebengerüsts ist eine sinnvolle Gestaltung einer Leicht-Bauweise, welche konstruktiv dafür angepasst sein kann, in insbesondere vorbestimmte Richtungen besonders hohe Zug- und Druckkräfte aufzunehmen. Der Begriff Zug- /Druck-Strebengerüst bezieht sich nicht nur auf eine Fachwerkkonstruktion, sondern das Zug-/Druck-Strebengerüst kann auch 3D-förmig ähnlich einer Struktur wie beispielsweise bei einem Knochentrabekel eines Knochens gestaltet sein. Es sind für die Versteifungsstruktur komplexe 3D-Strukturen möglich. Entscheidend ist, dass die Versteifungsstruktur Hohlräume durch das Zug-/Druck-Strebengerüst ausbildet und Kräfte über Streben des Zug-/Druck-Strebengerüsts, die in Hauptsache auf Zug-Druck ausgelegt sind, zwischen Verbindungspunkten der Streben geleitet werden können.

Es ist von Vorteil, wenn die Versteifungsstruktur zumindest zwei radial verlaufende Streben aufweist. Durch die Streben in radialer Richtung können Kräfte in radialer Richtung aufgenommen werden. Insbesondere können durch die Streben sich diametral gegenüberliegende Trägerabschnitte verbunden werden.

Drei Streben verlaufen in einer Ebene orthogonal zu der Rotationsachse und parallel zueinander. Die drei Streben müssen nicht zwingendermaßen die Rotationsachse schneiden, sondern können in einer Ebene orthogonal zu der Rotationsachse versetzt angeordnet sein. Die drei Streben verbinden die Trägerabschnitte.

Die Versteifungsstruktur ist, in axialer Richtung gesehen, gitterartig ausgebildet. Die Ausbildung der Versteifungsstruktur als gitterartiges/gitterförmiges Zug-/Druck-Strebengerüst ist dahingehend vorteilhaft, dass die einen parallel zueinander ausgebildeten Streben und die anderen parallel zueinander ausgebildeten Streben die Kräfte der Trägerstruktur in die jeweiligen bevorzugten Richtungen aufnehmen können. Bei der Ausführungsform von zwei sich diametral gegenüberliegenden Trägerabschnitten, weist die Versteifungsstruktur drei parallel zueinander angeordnete Streben, welche die Trägerabschnitte miteinander verbinden, und eine weitere, diese Streben senkrecht schneidende und mittig zwischen den Trägerabschnitten angeordnete Strebe zur Versteifung auf.

In einer bevorzugten Ausführungsform kann die Versteifungsstruktur zumindest zwei axial versetzt angeordnete Streben aufweisen. Vorzugsweise schneiden diese Streben die Rotationsachse. Auf diese Weise wird das Rotationswerkzeug entlang seiner axialen Achse in radialer Richtung versteift.

Insbesondere kann die Versteifungsstruktur eine koaxial zur Rotationsachse verlaufende Strebe aufweisen. Diese koaxial zur Rotationsachse verlaufende Strebe dient einer axialen Versteifung.

Vorteilhafterweise können die Streben zylinderförmig und/oder quaderförmig und/oder rohrförmig ausgestaltet sein. Die Streben können im Querschnitt gesehen eine kreisförmige, rechteckförmige oder ringförmige Struktur aufweisen. Diese Ausgestaltung dient einer optimierten Zug-und Druckaufnahme der Streben. Dabei kann sich die Abmessung des Querschnitts innerhalb einer Strebe ändern. Beispielsweise kann eine Strebe mit (im Querschnitt) kreisförmiger oder ringförmiger Struktur verschiedene Durchmesser entlang seiner Längsachse aufweisen.

In einer bevorzugten Ausführungsform kann die Trägerstruktur und/oder die Versteifungsstruktur generativ bzw. additiv, hergestellt sein. Das generative/generische Fertigungsverfahren bzw. die additive Fertigung (additive manufacturing) ist eine effektive Fertigungstechnologie für komplexe Bauteilgeometrien, welche es erlaubt, die Trägerstruktur individuell an eine auftretende mechanische Belastung anzupassen und in diesem Zusammenhang eine Leicht-Bauweise zu schaffen, welche gegenüber herkömmlichen Verfahren noch leichter ausgelegt werden kann. Auch lassen sich durch die additive Fertigung Hinterschnitte einbringen. Ebenso kann die Trägerstruktur so gestaltet werden, dass in unterschiedlichen Bereichen der Trägerstruktur unterschiedliches Material eingesetzt und somit eine Auslegung der mechanischen Belastung und ebenso einer Wärmedehnung weiter verbessert werden kann. Insbesondere können die Streben der Versteifungsstruktur ein anderes Material als die Trägerabschnitte der Trägerstruktur aufweisen. Vorzugsweise wird die Trägerstruktur durch selektives Laserschmelzen, selektives Lasersintern oder Elektronenstrahlschmelzen hergestellt.

Die generative bzw. additive Herstellung einer in Leicht-Bauweise ausgeführten Trägerstruktur mit integrierter Versteifungsstruktur, insbesondere für die Gestaltung von drehangetriebenen Werkzeugen zur Bearbeitung großer und ggf. tiefer Bohrungen ist Gegenstand einer selbstständigen Erfindung.

In einer bevorzugten und ggf. unabhängig zu beanspruchenden Variante kann die Trägerstruktur und/oder die Versteifungsstruktur einen (mittleren) Wärmeausdehnungskoeffizienten /eine Längenausdehnungszahl/Ausdehnungs-koeffizienten von unter $10 \cdot 10^{-6} \frac{1}{K}$ (10E-6 1/K, 10×10^(-6) 1/K), besonders bevorzugt von unter $7 \cdot 10^{-6} \frac{1}{K}$ und ganz besonders bevorzugt von unter $2 \cdot 10^{-6} \frac{1}{K}$ (2E-6 1/K), im Temperaturbereich von 0 bis 80°C aufweisen. Besonders bevorzugt, weist die Trägerstruktur auch im Temperaturbereich von 0 bis 300°C einen Wärmeausdehnungs-koeffizienten von unter $2 \cdot 10^{-6} \frac{1}{K}$ auf. Durch den besonders geringen Wärmeausdehnungskoeffizienten der Trägerstruktur wird die geometrische Änderung in insbesondere radialer Richtung beschränkt, was sich positiv auf eine Maßhaltigkeit des Rotationswerkzeugs bei einer Temperaturschwankung auswirkt. Ein "mittlerer" Wärmeausdehnungskoeffizient bedeutet in diesem Zusammenhang, dass die Trägerstruktur mit beispielsweise unterschiedlichen Materialien in unterschiedlichen Abschnitten, einen gemittelten Wärmeausdehnungskoeffizienten, insbesondere in radialer Richtung, aufweist, der dem mittleren Wärmeausdehnungskoeffizienten entspricht. Insbesondere weist die Trägerstruktur einen isotropen Wärmeausdehnungskoeffizienten in alle Richtungen auf. Alternativ kann die Trägerstruktur und/oder die Versteifungsstruktur einen kohlenstofffaserverstärkten Kunststoff (carbonfaserverstärkter Kunststoff - CFK) als Material aufweisen, der eine richtungsabhängigen Wärmeausdehnungskoeffizienten hat. CFK ist ein Verbundwerkstoff mit sehr geringer Dichte bei gleichzeitig hoher Steifigkeit. Der Wärmeausdehnungskoeffizient von CFK ist in Faserrichtung sehr gering und beträgt unter $1 \cdot 10^{-6} \frac{1}{K}$. Insbesondere können die Streben der Versteifungsstruktur CFK als Material aufweisen, wobei die Faserrichtung parallel zur Längsachse der Streben angeordnet ist. Somit wird aufgrund des niedrigen Wärmeausdehnungskoeffizienten von CFK eine Wärmeausdehnung in radialer Richtung beschränkt wobei gleichzeitig eine hohe Zug-und Druckfestigkeit gewahrt bleibt.

Besonders bevorzugt kann die Trägerstruktur aus einem Verbundmaterial hergestellt sein, das Invar und/oder Titan und/oder eine Nickel-Eisen-Legierung aufweist. Invar ist eine binäre Eisen-Nickel-Legierung mit einem besonders niedrigen Wärmeausdehnungskoeffizienten und ist auch unter der Bezeichnung Invar 36, Nilo alloy 36, Nilvar, Ni 36 oder NiLo36 bekannt. NiLo36 hat die Werkstoffnummer 1.3912. Selbst bis Temperaturen von 500°C bewegt sich sein Wärmeausdehnungskoeffizient unter $10 \cdot 10^{-6} \frac{1}{K}$. Gleichzeitig weist Invar eine Zugfestigkeit Rm von ca. $500 \frac{N}{mm^2}$ und ein E-Modul von ca. 140 GPa auf, um den Festigkeitsanforderungen des Rotationswerkzeugs zu genügen. Titan ist dehnbar sowie korrosions- und temperaturbeständig und weist mit einen Wärmeausdehnungs-koeffizienten von $8,2 \cdot 10^{-6} \frac{1}{K}$ auf. Entsprechende Legierungen können Zugfestigkeiten Rm von teils weit über $800 \frac{N}{mm^2}$ erreichen. Insbesondere weist die Trägerstruktur die Titanlegierung Ti6Al4V (Werkstoffnummer 3.7165) auf.

Es ist von Vorteil, wenn zumindest die Versteifungsstruktur aus Invar hergestellt ist. Die Versteifungsstruktur ist maßgeblich für eine thermische Wärmedehnung verantwortlich, weshalb diese einen möglichst geringen Wärmeausdehnungskoeffizienten aufweisen soll. Invar ist ein geeignetes Material für diese Zwecke. Insbesondere kann die gesamte Trägerstruktur aus Invar hergestellt sein. Alternativ können die Versteifungsstruktur aus Invar und die Trägerabschnitte aus Titan hergestellt sein.

Vorzugsweise kann die Trägerstruktur punktsymmetrisch zu der Rotationsachse des Rotationswerkzeugs ausgebildet sein. Die punktsymmetrische Ausbildung begünstigt eine gleichmäßige Rotationsträgheit und eine ausgeglichene Drehbewegung des Rotationswerkzeugs. Ebenso wird eine gleichmäßige Kraftaufnahme in radialer Richtung um die Rotationsachse sichergestellt.

Vorzugsweise kann das Rotationswerkzeug dafür angepasst sein, einen Innendurchmesser von über 200mm, besonders bevorzugt von über 300mm, und ganz besonders bevorzugt von über 400mm zu bearbeiten. Derart große Innendurchmesser sind für beispielsweise Statorgehäuse von Elektromotoren von Bedeutung. Das erfindungsgemäße Rotationswerkzeug erfüllt trotz großer Innendurchmesser die bereits in der Einleitung beschrieben höchsten Ansprüche an die Präzision der zerspanenden Bearbeitung, welche aufgrund der hohen Drehzahlen des Elektromotors gestellt werden, um eine Hauptbohrung letztlich auf wenige $\mu$m genau fertig zu bearbeiten.

Vorzugsweise kann das Rotationswerkzeug dafür angepasst sein, einen Innendurchmesser mit einer axialen Länge bis zu 400mm zu bearbeiten.

In einer bevorzugten Ausführungsform kann die zumindest eine Schneide unmittelbar an der Trägerstruktur oder an einem von der Trägerstruktur getragenen Schneidkörper ausgebildet sein. Der Schneidkörper bildet hierbei einen separaten Körper aus, welcher insbesondere austauschbar ist und ein gegenüber der Trägerstruktur unterschiedliches Material mit insbesondere erhöhter Härte aufweisen kann.

Vorzugsweise kann der Schneidkörper in einer axial und/oder radial einstellbaren Kassette gehalten sein. Mittels der Kassette lassen sich eine radiale und/oder axiale Position und/oder eine Winkelstellung des Schneidkörpers und damit der Schneide modifizieren.

Vorzugsweise kann die Trägerstruktur in Axialrichtung zumindest in eine erste und eine zweite Schneidstufe unterteilt sein, die jeweils zumindest eine Schneide tragen, wobei sich ein Schneidkreis-Durchmesser der ersten Schneidstufe von dem der zweiten Schneidstufe unterscheidet. Durch eine solche Ausgestaltung der Trägerstruktur lässt sich eine sukzessive Bearbeitung mit sukzessiver Erhöhung des Schneidkreisdurchmessers erzielen. Insbesondere bei einer zu bearbeitenden Durchgangsbohrung kann das Rotationswerkzeug so bei einer axialen Führung die eine Schneidstufe zunächst ein erstes Volumen und nachfolgend hierauf die andere Schneidstufe ein zusätzliches Volumen spanend vom Werkstück abnehmen. Durch die stufenweise Bearbeitung des Werkstücks mittels der Schneidstufen kann in einem einzigen Bearbeitungsschritt ein hohes Volumen an Material abgetragen werden. Alternativ kann das Rotationswerkzeug auch dafür eingesetzt werden, einen Innendurchmesser eines Werkstücks derart zu bearbeiten, dass aufgrund der Schneidstufen ein gestufter Innendurchmesser entsteht.

Vorzugsweise kann der Schneidkreis-Durchmesser der Schneidstufen zu dem Spannabschnitt bzw. dem Kopplungsabschnitt der Trägerstruktur hin zunehmen.

In einer bevorzugten Variante kann die Trägerstruktur in Axialrichtung in eine erste bis fünfte Schneidstufe unterteilt sein, die zu dem Spannabschnitt hin axial teilweise überlappend angeordnet sind, wobei der Schneidkreis-Durchmesser der Schneidstufen zu dem Spannabschnitt hin zunimmt. Durch die fünf Schneidstufen und der zum Spannabschnitt hin zunehmenden Schneidkreis-Durchmesser, wird eine fünfstufige Bearbeitung des Innendurchmessers erzielt. Alternativ kann mit dem Rotationswerkzeug auch ein Innendurchmesser mit fünf Stufen bzw. mit fünf zunehmenden Schneidkreis-Durchmessern gestaltet werden.

Gemäß einem weiteren Aspekt der Erfindung können die Schneiden der Schneidstufen in Umfangsrichtung um die Rotationsachse gegeneinander versetzt angeordnet sein. Dies begünstigte eine geringe axiale Ausdehnung bedingt durch eine Überlappung der Schneidstufen sowie einen gleichmäßigeren Krafteintrag der Schneiden in die Trägerstruktur.

Insbesondere weist die Trägerstruktur radial außen blockförmige Vorsprünge auf, welche die Schneiden tragen.

Insbesondere kann das Rotationswerkzeug innengekühlt sein. Das Rotationswerkzeug weist hierfür in seiner Trägerstruktur Fluidkanäle für eine Kühlung auf.

In einer bevorzugten Ausführungsform kann die schirmartig ausgebildete Trägerstruktur in Form eines Topfes gestaltet sein.

Gemäß einem weiteren Aspekt der Erfindung kann die schirmartig ausgebildete Trägerstruktur in Form eines Topfes mit zwei in axialer Richtung abgeschnittenen Seiten gestaltet sein, wodurch sich zwei Flanken der Trägerstruktur ergeben. Die flachen, abgeschnittenen Seiten der Trägerstruktur ermöglichen eine Stapelbarkeit des Rotationswerkzeugs und begünstigen eine Lagerung und Logistik in beispielsweise Bearbeitungszentren.

Gemäß einer unabhängig beanspruchbaren Ausführungsform, kann die Trägerstruktur als Material einen Faser-Kunststoff-Verbund mit einem Matrixsystem mit eingebetteten Fasern aufweisen und der Faser-Kunststoff-Verbund in zumindest einer Richtung quer zu der Rotationsachse einen Wärmeausdehnungskoeffizient von unter 5ppm/K (5E-6 1/K), vorzugsweise von unter 2ppm/K, besonders bevorzugt von unter 1ppm/K aufweisen. Faser-Kunststoff-Verbund (FKV) weist in mehreren Hinsichten Vorteile für eine Verwendung in dem Rotationswerkzeug auf. Zum einen können mit der Auswahl und Konfiguration der Fasern bzw. Faserlagen in dem Matrixsystem bestimmte Eigenschaften eingestellt werden, zum anderen weisen sie, bei hoher mechanischer Belastbarkeit, ein geringes Gewicht und eine hohe Langlebigkeit auf. Aufgrund des geringen Gewichts kann ein Kippmoment des Rotationswerkzeugs verringert werden, was zur Folge hat, dass der Spannabschnitt bzw. der Durchmesser des Hohlschaftkegels kleiner gestaltet werden kann, weswegen kleinere Spindeln und insbesondere bereits vorhandene Spindeln bzw. Spindelsysteme verwendet werden können. In dieser Ausführungsform weist der Faser-Kunststoff-Verbund in zumindest einer radialen Richtung oder in einer Richtung quer zu der Rotationsachse einen sehr niedrigen Wärmeausdehnungskoeffizienten auf, um im Einsatz des Werkzeugs bei thermischer Beanspruchung eine hohe Maßhaltigkeit der Lage der Werkzeugschneiden sicherzustellen.

Damit können Maschinenwerkzeuge mit großem Nenndurchmesser hergestellt werden, bei denen die Schneiden auch dann, wenn das Werkzeug relativ hohe Temperaturen annimmt, die Lage zur Drehachse nur minimal verändern, wobei gleichzeitig eine Reduzierung der Werkzeugmasse bei verbesserter Schwingungsdämpfungseigenschaft gelingt.

Insbesondere kann der Faser-Kunststoff-Verbund (Hoch-Modul) PBO-Fasern und/oder Kohlenstoff-Fasern (auch unter den Bezeichnungen Kohlefasern, Carbonfasern oder CFK-Fasern bekannt) als Fasern aufweisen. Diese Fasern sind besonders für einen Einsatz in einem spanabhebenden Rotationswerkzeug geeignet, da die Fasern einen negativen Wärmeausdehnungskoeffizienten aufweisen. Insbesondere die PBO-Faser (Markenname ZYLON® HM von dem Unternehmen TOYOBO Co., LTD.) weist einen starken negativen Wärmeausdehnungskoeffizienten von -6ppm/K auf. Mittels einer guten Faser-Matrix-Haftung prägen sie diese Eigenschaft dem Faser-Kunststoff-Verbund auf. Der Begriff PBO-Faser und die Bezeichnung ZYLON® HM werden als Synonyme verwendet. Im Vergleich zu Aramidfasern beispielsweise zeichnen sich PBO-Fasern durch eine wesentlich höhere Steifigkeit der Faser, eine wesentlich geringere Feuchtigkeitsaufnahme, und einer wesentlich besseren Stabilität gegenüber UV-Licht aus. Darüber hinaus besitzt die PBO-Faser im Vergleich zu anderen polymeren Hochleistungsfasern, welche z.B. unter dem Markennamen "Dyneema" bekannt ist, eine ausgezeichnete Faser-Matrix-Haftung. Diese Fasern prägen dem Faser-Kunststoff-Verbund besonders gut ihre Eigenschaften, insbesondere die der Wärmeausdehnung auf. So kann insbesondere erreicht werden, dass durch die Auswahl Fasern auch bei großen Bauvolumen eine extrem gute Maßhaltigkeit bei thermischer Beanspruchung gewährleistet werden kann. Der spezielle Faser-Kunststoff-Verbund mit den Kohlenstofffasern und/oder den PBO-Fasern ist damit den wichtigsten Anforderungen des Einsatzgebiets einer Werkzeugkomponente gewachsen, selbst wenn diese sehr große Abmessungen aufweist.

Gemäß einer weiteren bevorzugten Ausführungsform kann das Matrixsystem eine duroplastische Kunststoffmatrix, vorzugsweise mit Vinylesterharz, Epoxidharz, Phenolharz und/oder ungesättigter Polyesterharz, als Matrixkomponente aufweisen. Ungesättigter Polyesterharz ist im Vergleich zu anderen Matrixharzen kostengünstig und verfügt über gute Chemikalienbeständigkeit, welche in einem Einsatz in dem spanabhebenden Rotationswerkzeug vonnöten sind. Da eine rasche Härtung problemlos möglich ist, eignet sich das ungesättigte Polyesterharz auch zur Serienfertigung. Auch ist ein Feuchteeinfluss auf insbesondere die Erweichungstemperatur vernachlässigbar. Epoxidharze weisen eine ausgezeichnete Klebe- und Haftungseigeschaft auf und es werden zudem, aufgrund der guten Faser-Matrix-Haftung und den geringen Schwindungseigenspannungen, sehr gute Ermüdungsfestigkeiten erreicht. Vinylesterharze sind kostengünstig und weisen ebenfalls eine gute Ermüdungsfestigkeit auf. Allen gemein ist, dass sie eine besonders gute Faser-Matrix-Haftung mit den PBO-Fasern und den Kohlestofffasern aufweisen.

Vorzugsweise können die Fasern des Faser-Kunststoff-Verbunds in zumindest einer zweidimensionalen Ebene ungeordnet in das Matrixsystem eingebettet sein, um eine zumindest zweidimensionale isotrope Eigenschaft des Faser-Kunststoff-Verbunds zu erzielen. Die zumindest zweidimensionale Ebene liegt dabei vorzugsweise orthogonal zu der Rotationsachse, um die Maßhaltigkeit des Rotationswerkzeugs in radialer Richtung zu gewährleisten. So kann der Faser-Kunststoff-Verbund beispielsweise bei einer mechanischen Belastung in radialer Richtung diese homogen aufnehmen und es wird (in der Werkzeugkomponente) eine Richtung begrenzter Belastbarkeit vermieden.

Insbesondere können die Fasern eine Länge zwischen 0,1mm und 80mm, besonders bevorzugt zwischen 1mm und 60mm und ganz besonders bevorzugt zwischen 10mm und 50mm aufweisen. Diese Längen sind besonders geeignet. Insbesondere Langfasern eignen sich besonders gut für eine Herstellung von Werkzeugkomponenten, die eine große radiale Erstreckung aufweisen, so dass fertigungstechnisch als auch produkttechnisch Zentrifugalkräfte und Werkzeug-Reaktionskräfte zuverlässig und weitgehend verformungsfrei aufgenommen werden und thermisch bedingte Lageänderungen der Werkzeugschneiden beschränkt bleiben.

Vorzugsweise kann das Rotationswerkzeug, insbesondere die Trägerstruktur, modular mit separat ausgebildeten und miteinander verbindbaren Werkzeugkomponenten aufgebaut sein, wobei diejenigen Module, die die Trägerabschnitte in radialer Richtung verbinden den Faser-Kunststoff-Verbund als Material aufweisen. Somit kann das Rotationswerkzeug modular bzw. in Differentialbauweise gestaltet werden, wobei die Werkzeugkomponenten, welche entscheidend für eine Maßhaltigkeit in radialer Richtung sind, den Faser-Kunststoff-Verbund mit dem sehr niedrigen Wärmeausdehnungskoeffizienten als Material aufweisen.

Es kann zweckmäßig sein, wenn die Trägerabschnitte um die Rotationsachse kreissegmentartig angeordnet sind und vorzugsweise Titan als Material aufweisen. Indem die Trägerabschnitte um die Rotationsachse kreissegmentartig angeordnet sind, sind die Trägerabschnitte in Umfangsrichtung nicht direkt miteinander verbunden sondern sie weisen einen Spalt zwischen sich auf. Bei einer Temperaturänderung innerhalb der Trägerabschnitte können sich diese ungehindert in Umfangsrichtung ausdehnen und verspannen nicht. In radialer Richtung weisen die Trägerabschnitte eine nur geringe Dicke auf, so dass die Wärmeausdehnung aufgrund ihrer Proportionalität zu der Länge einen nur geringen Einfluss auf die Maßhaltigkeit in radialer Richtung ausübt. Vorzugsweise können die Trägerabschnitte Titan als Material aufweisen, das, wie bereits vorstehend erläutert, einen nur geringen Ausdehnungskoeffizienten aufweist.

Gemäß einer weiteren Ausführungsform kann die Trägerstruktur eine, vorzugsweise rechteckförmige oder kreisförmige, orthogonal zur Rotationsachse ausgerichtete Trägerplatte mit Faser-Kunststoff-Verbund mit PBO-Fasern und/oder Kohlenstoff-Fasern aufweist, welche an dem Spannabschnitt und an den Trägerabschnitten befestigt, insbesondere angeschraubt und/oder stoffschlüssig gefügt, vorzugsweise geklebt, ist. Diese Ausgestaltung der Trägerstruktur mit modularen Werkzeugkomponenten erlaubt es, dass die orthogonal zur Rotationsachse ausgerichtete Trägerplatte das Drehmoment überträgt und mittels des Faser-Kunststoff-Verbundes die Wärmeausdehnung in radialer Richtung auf ein Minimum reduziert. Der Spannabschnitt kann hingegen wie gewohnt als Standardmodul an der Trägerplatte befestigt werden.

Vorzugsweise kann die Trägerplatte zumindest einen, vorzugsweise vier, integrierten Kühlkanal aufweisen, der Kühlmittel von dem Spannabschnitt aus radial nach außen, vorzugsweise zu den Trägerabschnitten und besonders bevorzugt direkt zu den Schneiden hin, transportiert. Durch einen in die Trägerplatte integrierten Kühlkanal kann, ausgehend von dem Spannabschnitt dem Bereich der Schneiden Kühlschmiermittel oder Kühlmittel, insbesondere Kühlöl, selbst dann zuverlässig zugeführt werden, wenn sich die Schneiden in erheblichem Abstand von der Rotationsachse und/oder von der Einspeisestelle im Spannabschnitt befinden.

Gemäß einem Aspekt der Erfindung kann die Trägerplatte und/oder die Versteifungsstruktur, vorzugsweise in axialer Richtung, mit den Trägerabschnitten verschraubt und/oder stoffschlüssig gefügt, vorzugsweise verklebt, sein. Für eine Werkzeugkomponente mit Faser-Kunststoff-Verbund als Material eignen sich eingebrachte Bohrlöcher bzw. Durchgangslöcher oder ein stoffschlüssiges Fügen besonders, da dies fertigungstechnisch einfach und effizient zu realisieren ist.

Gemäß einem weiteren Aspekt der Erfindung kann die Trägerplatte und/oder die Versteifungsstruktur eine Nut, insbesondere eine Dreiecksnut, mit Vertiefung in axialer Richtung aufweisen, die sich vorzugsweise in umfänglicher Richtung konzentrisch um die Rotationsachse erstreckt, in welche ein an den Trägerabschnitten komplementär ausgebildeter Vorsprung formschlüssig eingreift, um die Trägerabschnitte gegenüber der Trägerplatte bzw. der Stützplatte in radialer Richtung formschlüssig zu fixieren, das heißt zu zentrieren. Durch die Nut und die komplementären Vorsprünge können die Trägerabschnitte formschlüssig an die Trägerplatte und/oder die Versteifungsstruktur angebunden werden, so dass die Trägerplatte und/oder die Versteifungsstruktur maßgeblich die gerichtete Wärmeausdehnung in radialer Richtung bestimmen. Vorzugsweise ist die Nut radial möglichst weit außen angeordnet, so dass ein radialer Abstand auf Seiten der Trägerabschnitte zwischen der Nut bzw. dem Vorsprung und den Schneiden möglichst minimiert wird.

Gemäß einem weiteren Aspekt der Erfindung kann die Trägerplatte auch einen Vorsprung oder eine Erhebung aufweisen, beispielsweise in Form einer Passfeder, um einen Formschluss mit den anderen Werkzeugkomponenten wie dem Spannabschnitt und/oder den Trägerabschnitten zu realisieren.

Vorzugsweise kann die Trägerstruktur in Form einer Hohlkammerbauweise oder einer Käfigbauweise ausgeführt sein. Die Hohlkammerbauweise weist dabei die Trägerplatte und die in axialer Richtung versetzte und an der Stirnseite befestigte Stützplatte auf, wobei zwischen diesen beiden Platten und zwischen den Trägerabschnitten zwei weitere Seitenplatten eingesetzt sind, so dass sich zwischen all den Platten (und den Trägerabschnitten) eine Hohlkammer bildet. Zusammen mit den Trägerabschnitten wird also eine Art Hohl-Würfel gebildet. Dies hat den Vorteil, dass ein Widerstandsmoment bzw. eine Steifigkeit des Rotationswerkzeugs bei minimaler Masse optimal ausgenutzt wird, Schwingungen besonders gut gedämpft werden und zudem Späne aus dem Innenvolumen herausgehalten werden. Das Rotationswerkzeug ist einfach zu reinigen. Bei der Käfigbauweise kann insbesondere die Stützplatte und/oder die Seitenplatten und/oder die Trägerplatte statt einer plattenförmigen Struktur eine Gitterstruktur aufweisen, so dass weiter Gewicht reduziert wird und das Rotationswerkzeug noch besser handhabbar ist.

Um von dem Spannabschnitt ein großes Drehmoment auf die Trägerplatte übertragen zu können, kann vorzugsweise der Spannabschnitt mit der Trägerplatte formschlüssig verbunden werden bzw. kann ein formschlüssiger Einschluss zwischen insbesondere dem Flansch des Spannabschnitts und der Trägerplatte vorgesehen sein.

Insbesondere kann die Trägerplatte auf der den Schneiden abgewandten Seite eine orthogonal auf die Rotationsachse stehende gerade Nut, insbesondere eine Dreiecksnut aufweisen, in welche ein komplementärer Vorsprung des Spannabschnitts formschlüssig eingreift, wobei die Nut so ausgerichtet ist, dass sie symmetrisch zwischen den zwei Trägerabschnitten liegt. Die Nut dient der Übertragung des Drehmoments mittels Formschluss von dem Spannabschnitt auf die Trägerplatte.

Vorzugsweise kann der Flansch des Spannabschnitts eine Ausnehmung aufweisen, in welche eine Erhebung oder ein Vorsprung der Trägerstruktur, insbesondere der Trägerplatte, formschlüssig eingreift, um insbesondere ein Drehmoment zu übertragen.

Gemäß einem weiteren Aspekt der Erfindung kann die Trägerstruktur, insbesondere die Trägerplatte, vorzugsweise geradlinige ausgeformte Führungs-Nuten, insbesondere in Form einer geradlinigen Dreiecksnut und/oder Führungs-Erhebungen, insbesondere in Form einer Passfeder, aufweisen. In diese Führungs-Nut bzw. Führungs-Erhebung greift formschlüssig eine weitere Werkzeugkomponente ein, so dass bei einer Wärmeausdehnung die Trägerstruktur bzw. die Trägerplatte die Richtung der Wärmeausdehnung der weiteren Werkzeugkomponente, wie etwa dem Spannabschnitt, vorgibt.

Die Erfindung wird nachfolgend anhand bevorzugter Ausführungsformen mit Hilfe von Figuren näher erläutert. Es zeigen:

Fign. 1 bis 4 unterschiedliche perspektivische Ansichten eines erfindungsgemäßen Rotationswerkzeugs einer bevorzugten Ausführungsform,

Fig. 5 eine Seitenansicht des Rotationswerkzeugs der bevorzugten Ausführungsform,

Fig. 6 eine Rückansicht des Rotationswerkzeugs der bevorzugten Ausführungsform,

Fig. 7 eine detaillierte Draufsicht eines Teilbereichs des Rotationswerkzeugs der bevorzugten Ausführungsform,

Fig. 8 eine perspektivische Ansicht eines erfindungsgemäßen Rotationswerkzeugs einer ersten nicht zur Erfindung gehörenden Ausführungsform in Hohlkammerbauweise,

Fign. 9 bis 13 unterschiedliche perspektivische Ansichten des Rotationswerkzeugs der ersten nicht zur Erfindung gehörenden Ausführungsform, wobei die Seitenplatten abgenommen sind.

Fig. 14 eine Draufsicht auf eine Trägerplatte des Rotationswerkzeugs, und

Fig. 15 eine perspektivische Ansicht eines Rotationswerkzeugs einer zweiten nicht zur Erfindung gehörenden Ausführungsform.

## Kurzbeschreibung der Zeichnungen

Die Figuren sind schematischer Natur und sollen nur dem Verständnis der Erfindung dienen. Gleiche Elemente sind mit denselben Bezugszeichen versehen. Die Merkmale der verschiedenen Ausführungsformen können untereinander ausgetauscht werden.

## Detaillierte Beschreibung bevorzugter Ausführungsformen

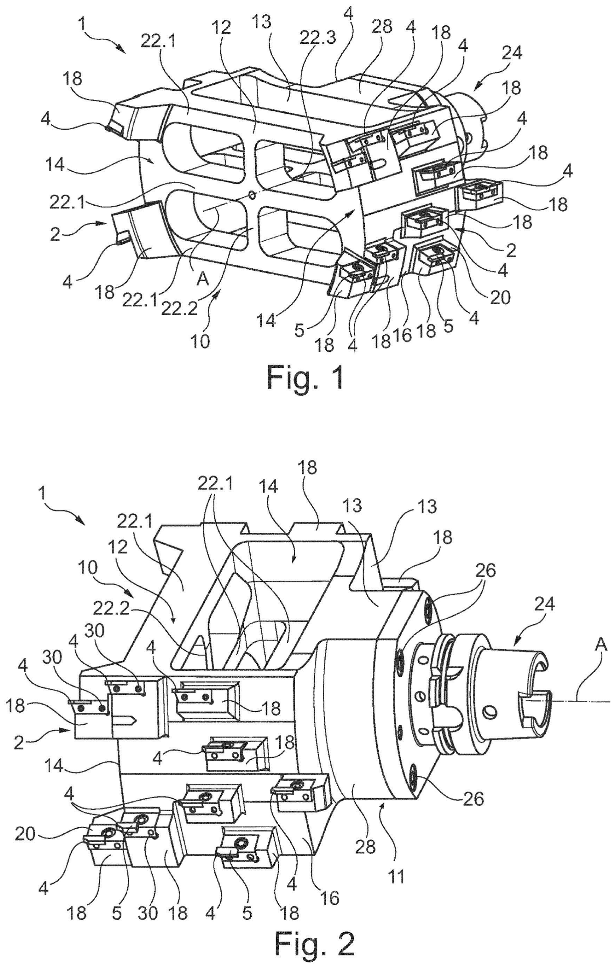

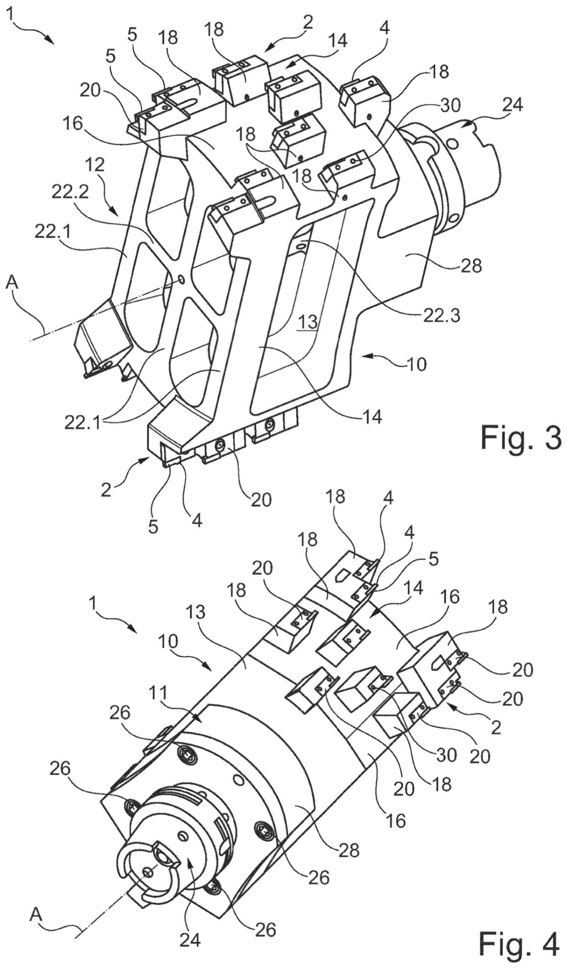

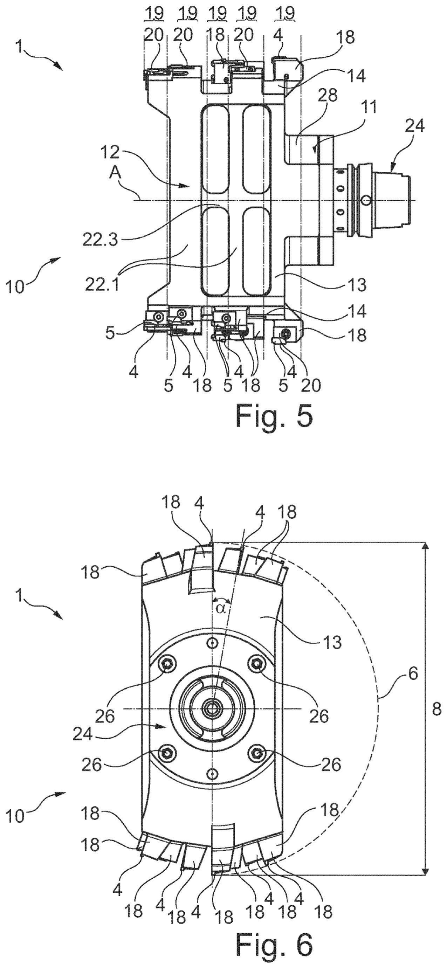

Figur 1 bis Figur 4 zeigen in unterschiedlichen perspektivischen Ansichten ein erfindungsgemäßes Rotationswerkzeug 1 einer bevorzugten Ausführungsform in Form einer Stufenreibahle. Das drehangetriebene Rotationswerkzeug 1 ist punktsymmetrisch um eine Rotationsachse A ausgestaltet und dient der hochpräzisen spanenden Bearbeitung von insbesondere metallischen Bauteilen, Bauteilen aus Kunststoff oder Bauteilen aus Faserverbundmaterialien. An einem Außenumfang 2 des Rotationswerkzeugs 1 sitzen hierfür Schneiden 4, welche bei einer Rotation des Rotationswerkzeugs 1 um die Rotationsachse A Material von einem zu bearbeitenden Werkstück (nicht dargestellt) spanend abtragen. Die Schneiden 4 sind in Form einer parallel zur Rotationsachse A gestalteten Kante an einem Schneidkörper 5 ausgebildet. Radial außenliegende Spitzen der Schneiden 4 an dem Außenumfang 2 beschreiben bei Rotation um die Rotationsachse A dabei jeweils einen kreisrunden Schneidkreis 6 mit einem zugehörigen Schneidkreis-Durchmesser 8 (siehe hierzu den exemplarischen Schneidkreis 6 einer ausgewählten Schneide 4 in Fig. 6). Dieser Schneidkreis-Durchmesser 8 bestimmt letztlich den resultierenden Innendurchmesser des zu bearbeitenden Werkstücks an der Stelle der Schneide 4.

Das Rotationswerkzeug 1 ist für große Innendurchmesser, beispielsweise den Innendurchmesser eines Statorgehäuses, ausgelegt. In dieser Ausführungsform weist das Rotationswerkzeug 1 einen Schneidkreis-Durchmesser 8 von bis zu 300mm auf. Ebenfalls ist das Rotationswerkzeug 1 dafür angepasst, einen Innendurchmesser mit einer axialen Länge bis zu 400mm zu bearbeiten. Das dafür ausgelegte Rotationswerkzeug 1 kann die notwendigen große Zerpanungsleistungen erbringen und dennoch die geforderten engen Fertigungstoleranzen, wie nachstehend erläutert, einhalten.

Das Rotationswerkzeug 1 weist eine Trägerstruktur 10 auf, welche die Schneidkörper 5 und damit die Schneiden 4 (mittelbar) trägt. Das Rotationswerkzeug 1 weist ebenso an einem hinteren Ende (siehe Fig. 2, rechter Bereich) einen Spannabschnitt 24 auf. Dieser ist als separates Bauteil ausgebildet und mit der Trägerstruktur 10 über einen Kopplungsabschnitt 11 dreh- und axialfixiert. Der Spannabschnitt 24 dient dem Einspannen des Rotationswerkzeugs 1 in eine entsprechende Werkzeugaufnahme (nicht dargestellt), welche das Rotationswerkzeug für eine spanende Bearbeitung positioniert und rotiert. Der Spannabschnitt kann eine solche Form haben, dass er über gängige Werkzeugaufnahmen an eine Spindel einer Werkzeugmaschine gekoppelt werden kann. Im speziellen Fall ist der Spannabschnitt 24 als eine sogenannte HSK-Schnittstelle (Hohlschaftkegel-Schnittstelle) gestaltet, die für eine innenliegende Kühl-/Schmiermittelversorgung ausgestaltet ist.

Erfindungsgemäß erweitert sich die Trägerstruktur 10 von dem Kopplungsabschnitt 11 ausgehend, der benachbart zum Spannabschnitt 24 ist, schirmartig. Durch die schirmartige Ausbildung der Trägerstruktur 10 kann von dem Spannabschnitt 24 auf die Trägerstruktur 10 ein Drehmoment sehr gut übertragen werden. Auch kann das Rotationswerkzeug 1 in Leicht-Bauweise kostengünstig hergestellt werden.

Im Speziellen weist die Trägerstruktur 10 zwei Trägerabschnitte / tragende Bereiche 14 auf, welche die Schneiden 4 tragen bzw. auf dem die Schneiden 4 mittelbar sitzen und eine hintere Wand 13 in einer Ebene orthogonal zu der Rotationsachse A auf, welche ausgehend von dem Kopplungsabschnitt 11, der benachbart zum Spannabschnitt 24 ist, die Trägerstruktur 10 zu den Trägerabschnitten 14 hin erweitert. Die Wand 13 verbindet die beiden hinteren Kanten der Trägerabschnitte 14 miteinander und leitet ein auf die Wand 13 aufgebrachtes Drehmoment in die Trägerabschnitte 14 ein. Radial innerhalb der Trägerstruktur 10 bzw. radial innerhalb der Trägerabschnitte 14 weist das Rotationswerkzeug 1 bzw. die Trägerstruktur 10 eine Versteifungsstruktur 12 in Form eines Zug-/Druck-Strebengerüsts auf. Während die beiden Trägerabschnitte 14 in Hauptsache die Funktion der spanenden Bearbeitung erfüllen, unterstützt der Versteifungsabschnitt 12 den Trägerabschnitt 14 hinsichtlich einer Stabilität sowie Versteifung und sorgt dafür, dass die bei einer spanenden Bearbeitung auftretenden Kräfte aufgenommen werden.

Die schirmartig ausgebildete Trägerstruktur 10 und die Versteifungsstruktur 12 sind mittels einer additiven Fertigung hergestellt. Im speziellen sind die Trägerstruktur 10 und die Versteifungsstruktur 12 Metall-lasergesintert oder selektiv lasergesintert oder selektiv lasergeschmolzen (DMLS/SLM) und ist aus dem Material Ti6Al4V hergestellt. Alternativ zu dieser Ausführungsform können natürlich die Versteifungsstruktur 12 auch aus Invar und die Trägerabschnitte 14 aus Ti6Al4V generativ gefertigt werden. Alternativ kann natürlich auch die gesamte Trägerstruktur 10 und die Versteifungsstruktur 12 aus dem Material Invar Metall-lasergesintert sein. Ebenso kann die Trägerstruktur 10 auch Silizium-Nitrid ($Si3N4$) aufweisen. Bei Titan Ti6Al4V (Werkstoffnummer 3.7165) handelt es sich um eine Titanlegierung mit sehr geringem spezifischen Gewicht und einer sehr guten Korrosionsbeständigkeit. Der mittlere Wärmeausdehnungskoeffizient liegt selbst im Bereich zwischen 20°C bis 650°C unter 10E-6 1/K und sichert so eine Maßhaltigkeit des Rotationswerkzeugs 1. Aufgrund des geringen spezifischen Gewichts von knapp 4,4 g/cm^3 in Verbindung mit der Ausgestaltung der Versteifungsstruktur 12 als Zug-/Druck-Strebengerüst, ist das Rotationswerkzeug 1 in Leicht-Bauweise gestaltet und dennoch den auftretenden mechanischen Belastungen angepasst. Aufgrund des einhergehend geringen Gewichts kann eine gute Handhabung und damit eine Einhaltung der Maßhaltigkeit sichergestellt werden.

Die Trägerstruktur 10 weist in dieser Ausführungsform zwei sich in Bezug auf die Rotationsachse A diametral gegenüberliegende Trägerabschnitte 14 auf, welche im Wesentlichen in Form eines Ringabschnitts oder Teilzylinderabschnitts um die Rotationsachse A gestaltet sind. Der Trägerabschnitt 14 weist auf einer planen teilzylinderförmigen Oberfläche 16 mehrere blockförmige Vorsprünge/Blöcke 18 in radialer Richtung auf. In dieser Ausführungsform weist die Trägerstruktur 10 neun blockförmige Vorsprünge 18 je Trägerabschnitt 14 auf. Die blockförmigen Vorsprünge 18 sind sowohl in axialer Richtung zueinander sowie mit einem Winkel gegenüber der Rotationsachse A zueinander versetzt. In jedem dieser blockförmigen Vorsprünge 18 ist eine Kassette 20 eigebettet, welche jeweils den Schneidkörper 5 in Form eines Schneideinsatzes hält. Die Kassette 20 lässt sich axial und radial einstellen, so dass mittelbar über die Kassette 20 auch der Schneidkörper 5 und damit die Schneide 4 axial und radial einstellbar ist. Der Schneidkörper 5 weist überdies eine spezielle Beschichtung für eine verbesserte Härte und Langlebigkeit auf. Die Kassetten 20 werden sowohl in radialer Richtung als auch in axialer Richtung von den blockförmigen Vorsprüngen 18 gestützt.

In axialer Richtung gesehen weist das Rotationswerkzeug 1 fünf Abschnitte auf, welche jeweils zumindest einen blockförmigen Vorsprung 18 der Trägerabschnitte 14 mit eingebetteter Kassette 20 und Schneide 4 haben, wobei sich diese Abschnitte teilweise überlappen. Diese fünf Abschnitte bilden sogenannte Schneidstufen 19 aus (siehe auch Fig. 5). Die Schneidstufen 19 weisen jeweils Schneiden 4 mit einem zugehörigen Schneidkreis-Durchmesser 8 auf, wobei sich die Schneidkreis-Durchmesser 8 aller Schneidstufen 19 unterscheiden und von einer vorderen Seite (Frontseite) des Rotationswerkzeugs 1 (in Fig. 5 linke Seite) in axialer Richtung zu einer hinteren Seite des Rotationswerkzeugs 1, also zu dem Spannabschnitt 24 hin zunehmen. Die einzelnen Schneidstufen 19 können bildlich gesehen als Scheiben des Rotationswerkzeugs 1 gesehen werden, die sich teilweise überlappen und im Durchmesser zu dem Spannabschnitt 24 des Rotationswerkzeugs hin größer werden. Die erste bzw. vorderste Schneidstufe 19 ist dabei in Form des blockförmigen Vorsprungs 18 der Trägerabschnitte 14 in sowohl axialer als auch radialer Richtung ausgebildet. In dieser Ausführungsform weisen die erste bis vierte Schneidstufe 19 (von der Frontseite zur hinteren Seite des Rotationswerkzeugs 1 gezählt) jeweils zwei Schneiden 4 und die fünfte Schneidstufe 19 genau eine Schneide 4 je Trägerabschnitt 14 auf.

Die beiden Trägerabschnitte 14 sind über die Versteifungsstruktur 12 miteinander verbunden. Konkret weist die Versteifungsstruktur 12 eine Vielzahl an Streben 22 auf, welche ein Zug-/Druck-Strebengerüst ausbilden. Die Versteifungsstruktur 12 weist an der vorderen Seite des Rotationswerkzeugs 1 drei Verbindungs-Streben 22.1 auf, welche die beiden Trägerabschnitte 14 miteinander verbinden. Die drei Verbindungs-Streben 22.1 liegen dabei in einer Ebene orthogonal zu der Rotationsachse A und verlaufen parallel zueinander. Die mittlere Verbindungs-Strebe 22.1 schneidet dabei die Rotationsachse A.

Die Verbindungs-Streben 22.1 weisen in dieser Ausführungsform eine quaderförmig Gestaltung mit rechteckigem Querschnitt auf, die eine Zug-/Druckkraft des einen Trägerabschnitts 14 auf den diametral gegenüberliegenden Trägerabschnitt 14 überträgt und so die Trägerstruktur 10 in radialer Richtung versteift.

Neben den Verbindungs-Streben 22.1 weist die Versteifungsstruktur 12 eine Versteifungsstrebe 22.2 auf, welche zwar ebenfalls in der Ebene orthogonal zu der Rotationsachse A liegt, allerdings senkrecht zu den Verbindungs-Streben 22.1 verläuft und diese schneidet. Die Versteifungsstrebe 22.2 dient der Fixierung und Versteifung der parallelen Anordnung der Verbindungs-Streben 22.1. In axialer Richtung gesehen, bilden die drei Verbindungs-Streben 22.1 und die eine Versteifungs-Strebe 22.2 eine gitterförmige Struktur aus, deren axiale Koordinaten gleich sind. Die gitterförmige Struktur ist optimiert für Zug-/Druckkräfte in Richtungen orthogonal zu der Rotationsachse A. Die Eckkanten der gitterförmigen Struktur bzw. die Kanten der Gitteröffnungen in axialer Richtung weisen innen Rundungen oder Phasen auf, um Spannungsspitzen abzubauen und Kräfte gleichmäßig in die Trägerabschnitte 14 einzuleiten.

Die Versteifungsstruktur 12 weist ferner eine koaxial zu der Rotationsachse A verlaufende Axial-Strebe 22.3 auf. Diese Axial-Strebe 22.3 dient der Versteifung in axialer Richtung und verringert ein Risiko eines "Einknickens" der gitterförmigen Struktur in axialer Richtung. Eine der gitterförmigen Struktur in axialer Richtung gesehen gegenüberliegende Seite ist in Form der Wand 13 ausgestaltet.

In axialer Richtung gesehen weist die Versteifungsstruktur 12 mittig gelegen zwischen der gitterförmigen Struktur und der Wand 13 eine weitere Verbindungs-Strebe 22.1 auf, welche die Rotationsachse A schneidet und die beiden Trägerabschnitte 14 verbindet. Diese Verbindungs-Strebe 22.1 dient der radialen Stützung und Versteifung eines mittigen Bereichs der Trägerabschnitte 14.

Der Spannabschnitt 24 des Rotationswerkzeugs 1 wird über vier Schrauben 26 in axialer Richtung mit der Wand 13 bzw. einem Blockabsatz 28 der Wand 13 fest verbunden. Der Blockabsatz 28 stellt das benötigte Material für Innengewinde zur Verfügung, in die Schrauben 26 eingeschraubt werden. Der Blockabsatz 28 stellt damit den Kopplungsabschnitt 11 des Rotationswerkzeugs dar.

Das Rotationswerkzeug 1 ist innengekühlt und weist hierfür von dem Spannabschnitt 24 ausgehende Kanäle 30 für ein Fluid auf. Die Kanäle 30 transportieren ein Kühl- /Schmiermittel zu den Schneiden 4 hin.

Fig. 5 zeigt eine Seitenansicht des erfindungsgemäßen Rotationswerkzeugs 1. In dieser Seitenansicht lassen sich gut die in axialer Richtung aneinandergereihten fünf Schneidstufen 19 erkennen, welche einen zum Spannabschnitt 24 hin zunehmenden Schneidkreis-Durchmesser 8 ihrer jeweiligen Schneiden 4 aufweisen und sich teilweise überlappen. Ebenso lassen sich gut die mittige Verbindungs-Strebe 22.1 und die Axial-Strebe 22.3 erkennen, welche in einer Seitenansicht eine zweite gitterförmige Struktur ausbilden. Die Versteifungsstruktur 12 des Rotationswerkzeugs 1 weist sowohl in axialer Richtung gesehen als auch in einer Seitenansicht eine gitterförmige Struktur auf. Diese beiden gitterförmigen Strukturen stehen dabei senkrecht aufeinander und bilden gewissermaßen ein T-Profil im radial innenliegenden Bereich der Trägerstruktur 10. Die Versteifungsstruktur 12 bildet zusammen mit der Wand 13 der Trägerstruktur 10 ein I-Profil bzw. ein Doppel-T-Träger (Doppel-T-Profil) aus, welches aufgrund der gitterförmigen Struktur und des verwendeten Materials in Kombination mit dem generativen Fertigungsverfahren in Leicht-Bauweise gestaltet ist und eine optimierte Geometrie für eine Stützung und Versteifung der Trägerabschnitte 14 in radialer Richtung bereitstellt.

Fig. 6 zeigt eine Rückansicht des Rotationswerkzeugs 1. Auch in dieser Ansicht lassen sich die unterschiedlichen Schneidkreis-Durchmesser 8 der fünf verschiedenen Schneidstufen 19 sowie Winkel der Schneiden 4 um die Rotationsachse A zueinander erkennen. In Fig. 6 ist beispielhaft ein Winkel $\alpha$ einer Schneide 4 zu einer anderen Schneide 4 einer anderen Schneidstufe 19 eingezeichnet. In der Rückansicht ist die Trägerstruktur 10, anders als bei gängigen Rotationswerkzeugen, im Wesentlichen rechteckförmig ausgebildet, wobei die zwei radial außenliegenden Seiten bzw. die Oberflächen 16 der Trägerabschnitte 14 nicht geradlinig sondern eine teilkreisförmig gestaltet sind. Die geraden Seiten ermöglichen eine gute Handhabung sowie eine Stapelung oder Aneinanderreihung des Rotationswerkzeugs 1. Hierdurch wird eine gute Lagerbarkeit und Transportfähigkeit erzielt.

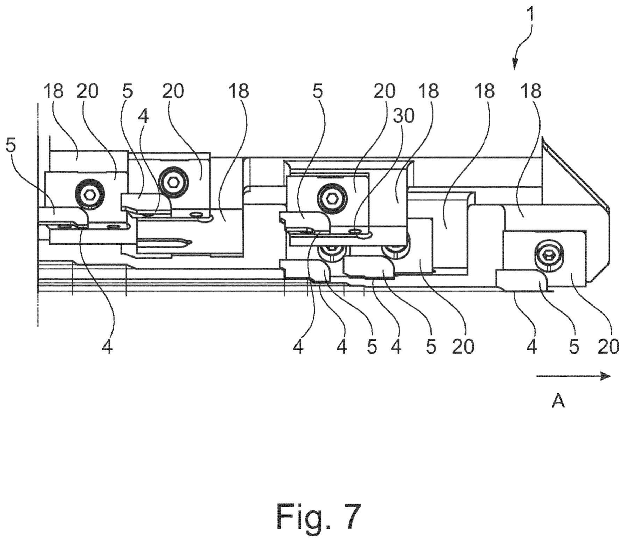

Fig. 7 ist eine detaillierte Draufsicht auf einen Teilbereich des Trägerabschnitts 14. Diese Ansicht zeigt die radial und axial einstellbaren Kassetten 20, welche die Schneidkörper 5 mit den Schneiden 4 halten. Die Schneiden 4 weisen jeweils unterschiedliche Abmessungen in axialer Richtung auf. Als Schneidstoff wird polykristalliner Diamant (PKD) verwendet, der auf den Schneidkörper 5 in Form des Schneideinsatzes mit einem Hartmetallgrundkörper aufgesintert ist. Der polykristalline Diamant ist eine extrem harte verwachsene Masse, wodurch die Schneide 4 für die spanende Bearbeitung von harten Werkstücken optimiert ist.

Selbstverständlich sind auch Abwandlungen von der zuvor beschriebenen Ausführungsform möglich, ohne den Grundgedanken der Erfindung zu verlassen.

Beispielsweise kann anstelle der generativen Fertigung kann selbstverständlich ein anderes Herstellungsverfahren Anwendung finden. Auch kann die Trägerstruktur auf den Spannabschnitt aufgedruckt werden.

Beispielsweise kann die Versteifungsstruktur auch als Tetraeder Zug-/Druck-Strebengerüst gestaltet sein. Die Streben müssen nicht senkrecht aufeinander stehen, sondern können auch einen Winkel ungleich 90° zwischen sich aufweisen, um das Zug-/Druck-Strebengerüst auszubilden.

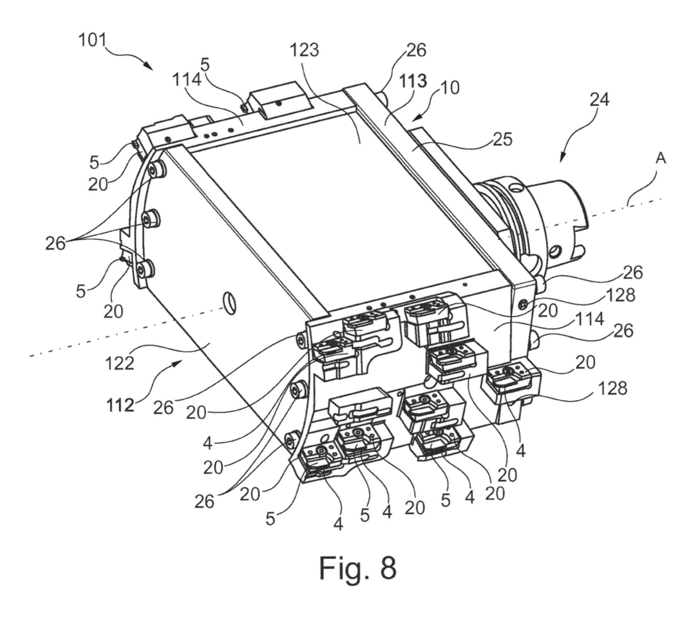

Figur 8 zeigt ein Rotationswerkzeug 101 in Form einer Stufenreibahle gemäß einer ersten nicht zur Erfindung gehörenden Ausführungsform. Das Rotationswerkzeug 101 ist in Hohlkammerbauweise gestaltet, und ist, im Unterschied zu der ersten Ausführungsform, nicht integral, sondern modular aus unterschiedlichen, miteinander verbundenen Werkzeugkomponenten aufgebaut. Die Trägerstruktur 110 weist im Konkreten drei verschiedene, separat ausgebildete Abschnitte auf, wobei der Spannabschnitt 24 wieder in der Ausgestaltung einer Hohlschaftkegel(HSK)-Aufnahme der Einleitung des Drehmoments dient. Eine mit dem Spannabschnitt 24 genauer gesagt mit einem Flansch 25 des Spannabschnitts 24 dreh- und axialfest verbundene, rechteckförmige Trägerplatte 113 dient als eine der Werkzeugkomponenten zur Weiterleitung des Drehmoments auf die radial außen gelegenen Trägerabschnitte / Schneidträger 114, wobei der Trägerabschnitt 114 mit den Schneiden 4 schließlich der spanenden Bearbeitung dient. Somit erfüllen die drei Bereiche unterschiedliche Funktionen. Durch die modulare Ausgestaltung können alle drei Bereiche optimal an ihre jeweilige Funktion angepasst werden und insbesondere hinsichtlich Maßhaltigkeit und Kosten gestaltet werden.

Die Trägerplatte 113 weist dabei Faser-Kunststoff-Verbund mit Kohlenstofffasern als Faserkomponente und Vinylestherharz als Matrixkomponente auf, wobei sie in Schichtverbundbauweise mit in der Radialebene ausgerichteten, ansonsten jedoch ungeordneten Fasern gestaltet sind. Mit anderen Worten sind die Fasern des Faser-Kunststoff-Verbundes in einer zweidimensionalen Ebene ungeordnet in das Matrixsystem eingebettet, so dass eine zweidimensionale isotrope Werkstoffeigenschaft des Faser-Kunststoff-Verbundes erreicht wird. Die Trägerplatte 113 steht orthogonal auf der Rotationsachse A, und die Rotationsachse bildet das Zentrum der Trägerplatte 113, so dass die Trägerplatte 113 in eine Richtung quer zu der Rotationsachse A die Ebene der Fasern aufweist. Da die Kohlenstofffasern einen leicht negativen Wärmeausdehnungskoeffizienten aufweisen, weist der Faser-Kunststoff-Verbund letztlich im Gesamten einen Wärmeausdehnungskoeffizienten von unter 5ppm/K (5E-6 1/K) in der Ebene quer zu der Rotationsachse A auf. Durch die geometrische Anordnung der Trägerplatte 113 quer zu der Rotationsachse A in Verbindung mit der Anordnung der Fasern, wird selbst im spanenden Bearbeitungsbetrieb des Werkzeugs mit erhöhtem Reib-Energieeintrag und entsprechend sich erheblich erhöhender bzw. wechselnder Temperatur der Trägerstruktur 110 eine gute Maßhaltigkeit des Rotationswerkzeugs 101 sichergestellt. Zumindest ein Abschnitt der Trägerplatte 113 kann als der Kopplungsabschnitt angesehen werden.

Alternativ oder zusätzlich können in dem Faser-Kunststoff-Verbund auch PBO-Fasern eingebettet werden. Die PBO-Fasern werden aktuell einzig von dem Unternehmen Toyobo Co., LTD. mit den Bezeichnungen ZYLON® AS und ZYLON® HM angeboten. Die (Hoch-Modul) PBO-Faser mit der Bezeichnung ZYLON® HM eignet sich besonders für die Auswahl als Faserkomponente und wird in dieser Anmeldung allgemein als der Begriff PBO-Faser definiert. Mit anderen Worten sind die Begriffe PBO-Faser und ZYLON® HM in der Anmeldung Synonyme.

Das Datenblatt zu den PBO-Fasern mit dem Titel "PBO FIBER ZYLON®" mit dem Information (Revised 2005.6)" in Form einer PDF-Datei mit 18 Seiten wurde Ende 2018 unter http://www.toyobo-global.com/seihin/kc/pbo/zylon-p/bussei-p/technical.pdfabgerufen. In Punkt "1. Basic Properties" werden die wichtigsten Eigenschaften von den PBO-Fasern aufgeführt:

Es gibt zwei Arten von PBO-Fasern, AS (as spun) und HM (high modulus / Hoch-Modul).

| | ZYLON® AS | ZYLON® HM |
|---|---|---|
| Filament decitex | 1,7 | 1,7 |
| Dichte (g/cm^3) | 1,54 | 1,56 |
| Zugfestigkeit (cN/dtex) (GPa) (kg/mm^2) | 37 5,8 590 | 37 5,8 590 |
| Zugmodul (cN/dtex) (GPa) (kg/mm^2) | 1150 180 18000 | 1720 270 28000 |
| Bruchdehnung (%) | 3,5 | 2,5 |
| Feuchtigkeitsaufnahme (%) | 2,0 | 0,6 |
| Zersetzungstemperatur (°C) | 650 | 650 |
| LOI | 68 | 68 |
| Wärmeausdehnungskoeffizient | - | $-6 \times 10^{-6}$ |

Vorzugsweise kann die Werkzeugkomponente des Rotationswerkzeugs gemäß dem nachstehend beschriebenen Verfahren, als eine bevorzugte Ausführungsform des Verfahrens, hergestellt sein.

In einem ersten Schritt des Verfahrens werden für einen Faser-Kunststoff-Verbund beispielsweise PBO-Fasern (ZYLON® HM) und/oder Kohlenstofffasern als Fasern bzw. Faserkomponente sowie beispielsweise Epoxidharz und/oder Vinylestherharz als duroplastische Matrixkomponente eines Matrixsystems ausgewählt. Hiernach schreitet das Verfahren zu einem Schritt voran, in welchem das Matrixsystem bereitgestellt wird. Das Matrixsystem weist dabei als eine (duroplastische) Matrixkomponente vorzugsweise Epoxidharz und/oder Vinylestherharz auf. Das Matrixsystem kann dabei nur Epoxidharz als duroplastische Matrixkomponente aufweisen oder aber auch weitere Matrixkomponenten wie etwa Vinylestherharz oder ungesättigte Polyestherharze.

Der Schritt Bereitstellen des Matrixsystems umfasst dabei vorzugsweise einen Schritt Bereitstellen einer Trägerfolie sowie einen Schritt, in welchem das unausgehärtete Matrixsystem auf die Trägerfolie aufgebracht wird.

Nach dem Schritt folgt der Schritt Zusammenstellen der Fasern mit an das Einsatzgebiet angepasster Längenverteilung. Dieser Schritt des Zusammenstellens umfasst vorzugsweise folgende Unterschritte: zunächst wird in einem (ersten Unter-)Schritt zumindest ein Faser-Roving der ausgewählten Fasern mit kreisförmigem oder ellipsenförmigem / elliptischem Querschnitt bereitgestellt. Unter einem (Faser-) Roving wird ein Bündel an parallelen Fasern in Form von Endlosfasern verstanden. Der Faser-Roving kann dabei vorzugsweise 1000 (1k), 3000 (3k), 6000 (6k), 12000 (12k), 24000 (24k) oder 50000 (50k) an den parallelen Fasern aufweisen. Um eine gleichmäßige Ausbildung der Materialeigenschaften zu gewährleisten, liegt die Zahl der parallelen Fasern in dem Faser-Roving vorzugsweise zwischen 1000 (1k) und 12000 (12k). Der Faser-Roving wird dabei vorzugsweise von einer Spule abgewickelt. Dieser Faser-Roving wird hiernach in einem Schritt zu einem möglichst flachen, bandförmigen Faser-Roving umgeformt, um, wie nachstehend beschrieben, eine möglichst gute Faser-Matrix-Haftung ohne unvorteilhafter Hohlräume zu erzielen. Beispielsweise kann der Faser-Roving über Abzugsvorrichtungen und Umlenkrollen geführt und möglichst breit aufgefächert werden. Um keine Endlos-Fasern zu erhalten, wird in einem folgenden Schritt vorzugsweise der flache, bandförmige Faser-Roving in Faser-Schnitzel vorbestimmter Längenverteilung zugeschnitten. Der Begriff Längenverteilung bezeichnet in diesem Zusammenhang die anteilsmäßige Verteilung der vorliegenden Längen der Fasern, bei der die Fasern gleich lang (Anteil der einzigen Länge an der Längenverteilung beträgt 100%; ein einziger "Peak") oder unterschiedlich lang (zurechtgeschnitten) vorliegen können (zumindest zwei verschiedene Längen mit jeweiligen Anteilen von unter 100%). Man kann auch sagen, dass die Längenverteilung eine Funktion über die Länge ist, deren Wert den Anteil der Länge wiedergibt, wobei die Summe der Anteile 100% ergibt. Für den Fall, dass die Fasern unterschiedliche Längen aufweisen, kann die Längenverteilung beispielsweise exakt zwei oder mehr definierte, unterschiedliche Längen an den Fasern aufweisen. Auch kann die Längenverteilung eine Normalverteilung der Länge der Fasern um ein Maximum einer bestimmten Länge sein. Diese Faser-Schnitzel bilden, zusammen mit gegebenenfalls noch weiteren Fasern, eine Fasermischung. Die Fasermischung kann, neben den Faser-Schnitzeln, noch weitere Fasern wie etwa Kohlenstoff-Fasern aufweisen. Die Fasermischung kann insbesondere nur die Vielzahl an Faser-Schnitzel einer einzigen vorbestimmten Länge aufweisen.

In einem nachfolgenden Schritt wird die Fasermischung mit den Faser-Schnitzeln dann schließlich dem Matrixsystem zugegeben. Dies erfolgt vorzugsweise definiert durch einen Schritt Aufrieseln der Fasermischung mit den Faser-Schnitzeln in einer an das Einsatzgebiet angepasster Menge auf eine Matrixschicht des Matrixsystems. So entsteht eine Faser-Schicht mit (zumindest) den Faser-Schnitzeln, welche auf der Matrixschicht des Matrixsystems aufliegt und ggf. in diese hineinsteht und in diese eindringt. Über die an das Einsatzgebiet angepasste Menge kann auch ein Volumenanteil der Fasern an dem Faser-Kunststoff-Verbund eingestellt werden.

Um die Fasern bzw. die Faser-Schnitzel in das Matrixsystem vornehmlich gänzlich einzubetten, folgt in einem Schritt der Auftrag einer weiteren Matrixschicht des Matrixsystems auf die Faser-Schicht. Um ein Halbzeug herzustellen, das auch gut handhabbar ist und bei weiterer Verarbeitung nicht mit insbesondere Anlagekomponenten verklebt, wird vorzugsweise in einem darauffolgenden Schritt auf die aufgetragene weitere Matrixschicht eine weitere Trägerfolie aufgebracht. So entsteht eine Sandwichkonfiguration als das Halbzeug aus Trägerfolie, Matrixschicht, Faser-Schicht, Matrixschicht und Trägerschicht, bei der die Faser-Schicht symmetrisch zwischen den anderen Schichten eingelegt und insbesondere eingebettet ist. Die Matrixschichten bilden die duroplastische Kunststoffmatrix 8.

Das so hergestellt Halbzeug wird in einem nachfolgenden Schritt mittels einer Kompaktierungseinheit kompaktiert und insbesondere gewalkt. Das hergestellte Halbzeug kann in diesem Zustand gehandhabt werden, insbesondere gelagert, transportiert, zurechtgeformt, insbesondere zurechtgeschnitten, zerrissen oder verbogen, werden. Auch können vorzugsweise mehrere Lagen des Halbzeugs lagenweise aufeinandergelegt oder aufeinandergeschichtet werden, wobei zwischen den Schichten jeweils die Trägerfolien entfernt werden.

Anschließend wird das kompaktierte Halbzeug, nachdem die Trägerfolien entfernt wurden, einer beheizbaren (Heizpress-)Form zugeführt, insbesondere in diese Form eingelegt, welche das Halbzeug formschlüssig verpresst und damit in seine letztliche Form bringt, erwärmt und durch den Pressheizvorgang aushärtet, um letztlich die Werkzeugkomponente in der Ausgestaltung eines Faser-Kunststoff-Verbund Pressformbauteils auszuformen. Unter dem hohen Druck und der hohen Temperatur sinkt dabei zunächst die Viskosität des Matrixsystems stark ab und lässt ein (teilweises) Fließen des Matrixsystems zu. In diesem Zustand werden die Fasern vollständig von dem Matrixsystem benetzt bzw. die Fasern weisen möglichst an allen Oberflächen einen direkten Kontakt zu dem Matrixsystem auf. Kurz darauf reagiert das Matrixsystem mit einhergehender Erhöhung seiner Viskosität und härtet aus.

In einem letzten Schritt des Verfahrens wird schließlich die pressgeformte Werkzeugkomponente aus der beheizbaren Form entnommen und kann ihren Einsatz, beispielsweise als die Trägerplatte 113 oder als die Stützplatte 122, in dem spanabhebenden Rotationswerkzeug 101 finden.

An der Stirnseite des Rotationswerkzeugs 101 ist eine parallel zu der Trägerplatte 113 und quer zu der Rotationsachse A angeordnete Stützplatte 122 mit zentraler Durchgangsöffnung als Versteifungsstruktur 112 an den zwei sich diametral gegenüberliegenden Trägerabschnitten 114 befestigt. Im speziellen sind sowohl Trägerplatte 113 als auch Stützplatte 122 in axialer Richtung mit den Trägerabschnitten 114 mittels Schrauben 26 verschraubt. Die Stützplatte 122 weist ebenfalls einen Faser-Kunststoff-Verbund als Material auf, bei dem Kohlenstofffasern als Faserkomponenten in das Matrixsystem eingebettet sind. Die Stützplatte 122 erfüllt wieder nur "Nebenfunktionen" und ist außerhalb eines Drehmomentübertragungszuges angeordnet. Daher kann sie entsprechend an die Anforderungen bezüglich Massereduktion und/oder einer Schwingungsdämpfung angepasst werden.

Zwischen der Trägerplatte 113, der Stützplatte 122 sowie zwischen den Trägerabschnitten 114 sind zudem zwei Seitenplatten 123 eingefasst und von diesen eingerahmt gehalten. Die Seitenplatten 123 sind symmetrisch zu der Rotationsachse A versetzt angeordnet und erstrecken sich im Wesentlichen von der Seite der Trägerplatte 113 zu der Seite der Stützplatte 122 hin. Zudem erstrecken sich die beiden Seitenplatten 123 von einer umfänglich äußeren Seite des Trägerabschnitts 114 zu der umfänglich äußeren Seite des gegenüberliegenden Trägerabschnitts 114. Die Trägerplatte 113, die Stützplatte 122, die Seitenplatten 123 und die Trägerabschnitte 114 bilden zusammen einen im Wesentlichen quaderförmigen Hohlraumkörper bzw. eine Hohlkammer aus. Diese Bauweise sorgt bei minimierter Masse für eine Bereitstellung eines großen Widerstandsmoments bzw. einer erhöhten Steifigkeit des Rotationswerkzeugs 101, wobei sich der zusätzliche Vorteil ergibt, dass sich Späne nicht im Inneren des Werkzeugs verfangen. Die Stützplatte 122 ebenso wie die Seitenplatte 123 können verhältnismäßig dünnwandig ausgeführt sein.

Sowohl die Trägerplatte 113, als auch die Stützplatte 122 und die Seitenplatten 123 weisen Faser-Kunststoff-Verbund mit Kohlenstofffasern und/oder PBO-Fasern als Material auf. Allen diesen Platten 113, 122, 123 ist gemein, dass sie sich orthogonal zu der Rotationsachse A erstrecken und im Wesentlichen die beiden Trägerabschnitte 114 in radialer Richtung bzw. in Richtung quer zu der Rotationsachse A miteinander verbinden. Dadurch, dass die Platten 113, 122, 123 Faser-Kunststoff-Verbund als Material aufweisen, und wobei die Trägerabschnitte 114 kreissegmentartig ausgeführt und angeordnet sind, verlagern sich die Schneiden 4 selbst bei erheblicher Temperaturbelastung im Bereich des Werkzeugs nur minimal, wodurch die Maßhaltigkeit des Werkzeugs eingehalten und das Rotationswerkzeug dennoch gut gehandhabt werden kann. Selbst bei erheblicher Temperaturerhöhung des Werkzeugs kann sichergestellt werden, dass die bei Raumtemperatur eingebetteten Schneiden 4 auch im Schneidbetrieb auf Maß bleiben und das Werkzeug aufgrund der Leichtbauweise gut gehandhabt werden kann. Dadurch kann auch ein kleiner Durchmesser des Spannabschnitts 24 bzw. kleiner Durchmesser des Hohlschaftkegels und damit einer entsprechenden Spindel erreicht werden.

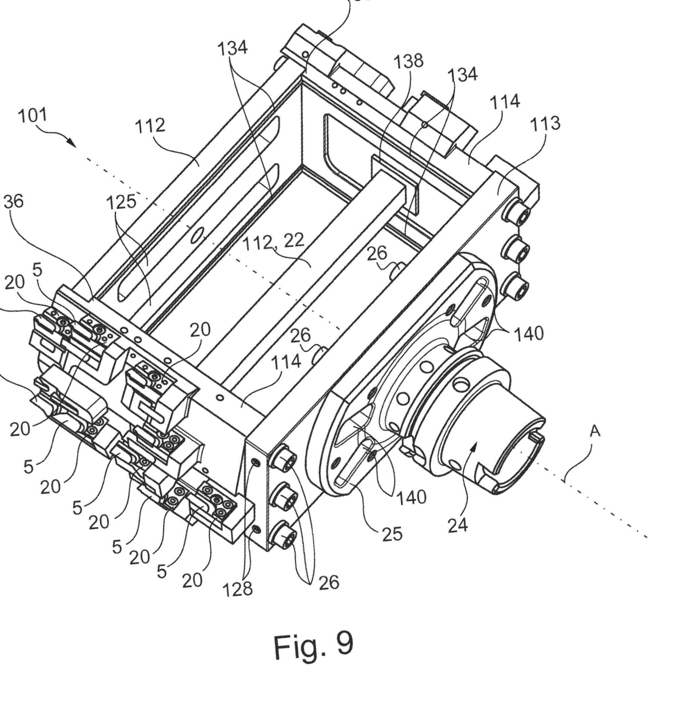

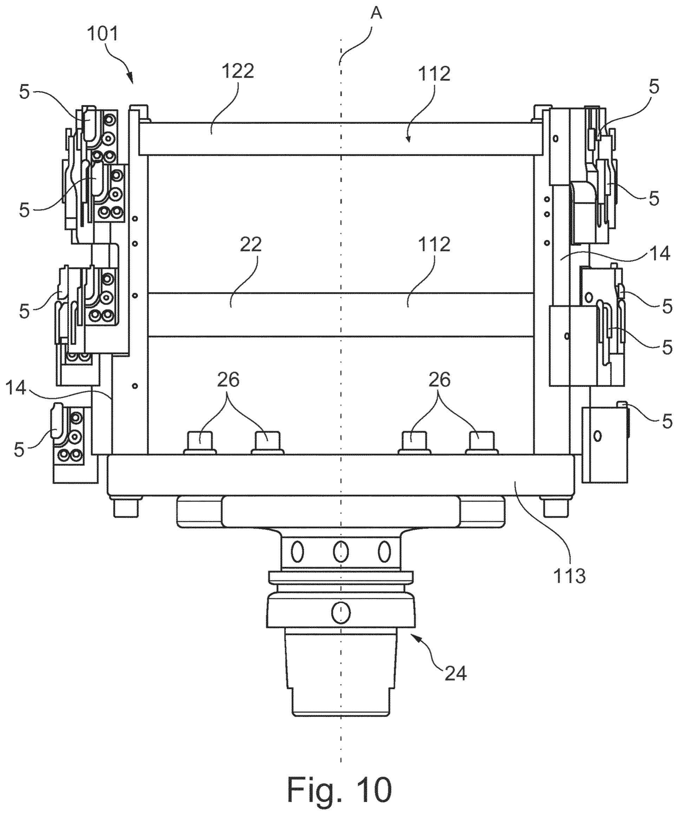

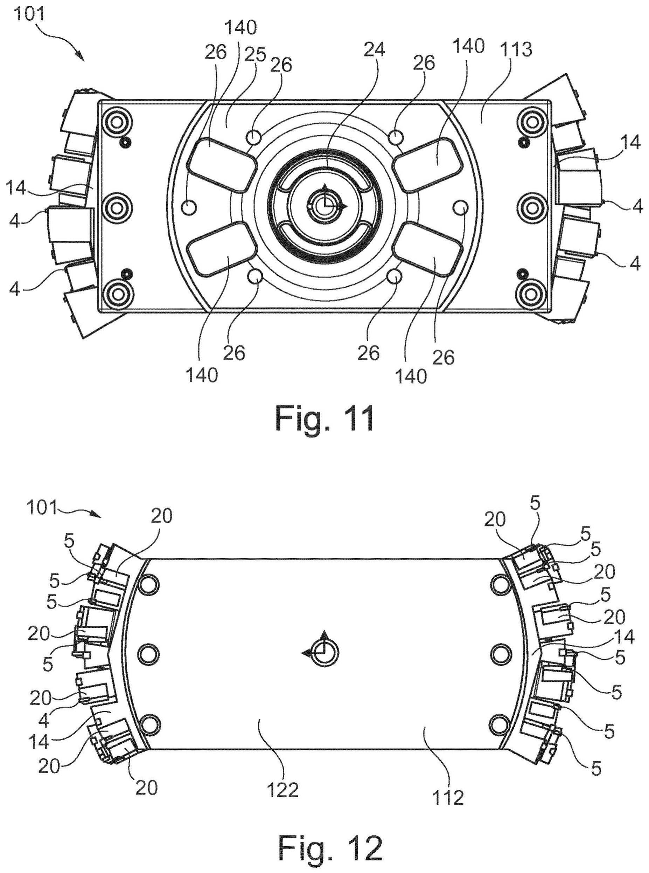

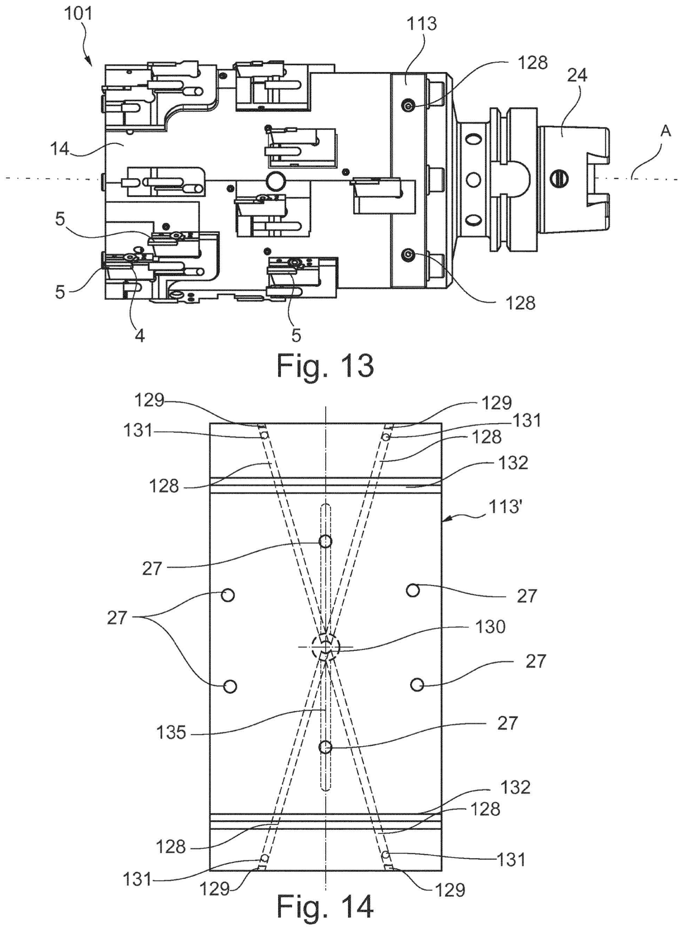

Figuren 9 bis 13 zeigen das erfindungsgemäße Rotationswerkzeug 101 der ersten nicht zur Erfindung gehörenden Ausführungsform im Detail, wobei die Seitenplatten 123 zur besseren Darstellung entfernt sind und Figur 10 eine Draufsicht, Fig. 11 eine Rückansicht, Figur 12 eine Vorderansicht und Fig. 13 eine Seitenansicht des Rotationswerkzeugs 101 gemäß der ersten nicht zur Erfindung gehörenden Ausführungsform. Die Seitenplatte 123 kann dadurch entnommen bzw. auch eingesetzt werden, indem die Stützplatte 122 abgeschraubt und von der Stirnseite des Rotationswerkzeugs 101 abgenommen wird, und hiernach die Seitenplatte 123 aus der nun nicht mehr gänzlich umlaufenden Nut 134 in axialer Richtung zur Stirnseite des Rotationswerkzeugs hinausgeschoben wird bzw., in entgegengesetzter Richtung wieder in die (teilumlaufende) Nut 134 eingeschoben wird. Die Seitenplatten 123 sind also nicht fest mit der Trägerstruktur 110 bzw. mit den Trägerabschnitten 114 und der Trägerplatte 110 verbunden, sondern mittels der Stützplatte 122 und der einrahmenden, umlaufenden Nut 134 formschlüssig gehalten. Zusätzlich können die Seitenplatten 123 natürlich noch stoffschlüssig verbunden, insbesondere geklebt, werden.

Die Seitenplatten müssen in einer weiteren alternativen Ausführungsform, welche nicht dargestellt ist, nicht Bestandteil des Rotationswerkzeugs sein, sondern es kann auch ein offenes Rotationswerkzeug ohne Seitenplatten gestaltet werden. Auch ist es möglich, dass die Seitenplatten nicht plattenförmig sondern anders gestaltet werden kann. Beispielsweise kann sie gitterförmig gestaltet werden, so dass ein Rotationswerkzeug in Käfigbauweise gebildet wird.

In Fig. 9 ist ersichtlich, dass in der ersten nicht zur Erfindung gehörenden Ausführungsform die Stützplatte 122 nicht im gesamten eine plattenförmige Struktur aufweist, sondern dass auf der der Trägerplatte 113 zugewandten Seite zwei Ausnehmungen 125 in Form von zwei breiten Nuten eingebracht sind, um eine Masse zu reduzieren. Mit anderen Worten ist die Stützplatte 122 mit Faser-Kunststoff-Verbund als Material, ähnlich zu der ersten bevorzugten Ausführungsform, zwar nicht gitterförmig, doch aber gewissermaßen teilgitterförmig mit drei Zug-/Druckstreben 22 quer zu der Rotationsachse A gewichtsoptimiert gestaltet.

Das Rotationswerkzeug 101 weist zudem, axial versetzt und im Wesentlichen in axialer Richtung mittig zwischen einer Trägerplatte 113 und der Stützplatte 122 und die Rotationsachse A schneidend eine weitere, quaderförmige, zentrale Zug-/Druckstrebe 22 auf, welche ebenfalls aus Faser-Kunststoff-Verbund ausgebildet ist und die beiden Trägerabschnitte 114 miteinander in radialer Richtung verbindet. Die Stützplatte 122, die Trägerplatte 113 und die zentrale Zug-/Druckstrebe 22 können beispielsweise alle den gleichen Faser-Kunststoff-Verbund als Material aufweisen, oder, an ihre jeweilige Funktion angepasst, unterschiedliche Faser-Kunststoff-Verbunde aufweisen. Die Zug-Druckstrebe 22 dient der radialen Versteifung sowie einer Aufnahme der Radialkräfte und einer Schwingungsdämpfung. Die zentrale Zug-Druckstrebe 22 ist an einem auf Seiten des Trägerabschnitts 114 ausgebildeten Sockel 138 befestigt.

Um die Seitenplatten 123 formschlüssig in ihrer Position zu fixieren, weisen sowohl die Stützplatte 122, die Trägerplatte 113 als auch die Trägerabschnitte 114 eine durchgängige, umlaufende Nut 134 auf, in welche die Seitenplatten 123 mit einem korrespondierenden Vorsprung eingreifen, wodurch sie formschlüssig eingefasst sind. Um das Rotationswerkzeug 101 zu kühlen, weist die Trägerplatte 113 zudem von einem mittigen auf Seiten des Spannabschnitts 24 gelegenen Einlass 130, radial nach außen verlaufende Kühlkanäle 128 auf. So kann über den Spannabschnitt 24 Kühlmittel oder Kühlschmiermittel eingeleitet und den Schneiden 4 zugeführt werden. Zum einen weist die Trägerplatte 113 die Kühlkanäle 128 auf, welche nach radial außen das Kühlmittel führen, wobei Richtungs-Umlenkung in axiale Richtung in der Trägerplatte 113 eingebracht sind, um die Kühlmittelkanäle 128 mit dem Kühlmittel in die Trägerabschnitte 114 zu leiten und dort möglichst nahe an den Schneiden 4 abzugeben. Die Kühlmittelkanäle 128 werden dafür an ihren radial außen liegenden Enden versiegelt, insbesondere mittels einer versiegelnden Madenschraube, die in ein in der Trägerplatte 113 ausgebildetes Gewinde eingreift. Radial weiter innen als die Madenschraube weist der Kühlmittelkanal 128 eine Bohrung in axialer Richtung auf, um eine Fluidverbindung mit den Trägerabschnitten 114 herzustellen und Kühlmittel oder Kühlschmiermittel in die Trägerabschnitte 114 zu transportieren. Die Trägerabschnitte 114 weisen innenliegend bzw. innerhalb des Bauteils an sich ein (nicht dargestelltes) Fluid-Verzweigungssystem für den Transport des Kühlmittels auf, um das Kühlmittel möglichst direkt an den Schneiden 4 bereitzustellen. Dafür kann das Verzweigungssystem insbesondere für jede Schneide 4 jeweils einen entsprechend zu der Schneide 4 bzw. zu dem Bereich der Schneide 4 führenden Kanal aufweisen. Die Stützplatte 122 ist in radialer Richtung von den Trägerabschnitten 114 eingefasst und liegt an einem Anschlag 136 in axialer Richtung an den Trägerabschnitten 114 zur Positionierung an. Mit anderen Worten liegen radial außerhalb der Stützplatte 122 die Trägerabschnitte 114.

Der Spannabschnitt 24, genauer gesagt der Flansch 25 des Spannabschnitts 24 ist mittels Schrauben 26 an die Trägerplatte 113 axial- und drehfest verbunden. Der Flansch 25 weist zudem vier längliche Ausnehmungen 140 auf, wobei Material in axialer Richtung aus dem Flansch 25 ausgenommen ist. Je zwei Ausnehmungen 140 erstrecken sich von der Rotationsachse A aus radial nach außen zu jeder Seite der Trägerabschnitte 114 hin. Diese Ausnehmungen 140 dienen einerseits einer Gewichtsreduktion, können aber andererseits auch in optional ausgebildete korrespondierende Erhebungen oder Vorsprünge in axiale Richtung der Trägerstruktur 110 bzw. der Trägerplatte 113 formschlüssig eingreifen, so dass ein auf den Spannabschnitt 24 aufgetragenes Drehmoment über die Ausnehmungen 140 in Kombination mit zumindest einer Erhebung bzw. einem Vorsprung formschlüssig übertragen werden kann. Insbesondere kann die Erhebung in Form einer Passfeder ausgebildet sein. Die Schrauben 26, welche den Spannabschnitt 24 mit der Trägerplatte 113 dreh- und axialfest verbinden, liegen radial möglichst weit außen, um eine hohe Drehmomentübertragung zu gewährleisten.

Figur 14 zeigt eine Werkzeugkomponente in Form einer Trägerplatte 113' gemäß einer weiteren, leicht abgewandelten, nicht zur Erfindung gehörenden Ausführungsform, welche in das Rotationswerkzeug 101 eingesetzt werden kann. Fig. 14 zeigt eine Draufsicht auf die Trägerplatte 113' von der Stirnseite des Rotationswerkzeugs 101 her, wenn die Trägerplatte 113' in dieses eingesetzt ist. Die Trägerplatte 113' weist die integrierten Kühlkanäle 128 auf, welche sich, ausgehend von dem zentral angeordneten Einlass 130 auf Seiten des Spannabschnitts 24, X-förmig geradlinig radial nach außen erstrecken und an der radialen Außenseite mittels einer Madenschraube 129 (hier nur als horizontaler Strich angedeutet) versiegelt sind. Die Trägerplatte 113' weist auf Seiten der Trägerabschnitte 114 (wenn in das Rotationswerkzeug 101 eingesetzt) radial weiter innen als die Madenschraube 129, Auslässe 131 in axialer Richtung auf, welche nur zu den Trägerabschnitten 114 hin eine Öffnung aufweisen und mit diesen fluidverbunden sind. Damit kann ausgehend von dem Einlass 130 eine Fluidverbindung der Kühlkanäle 128 zu den Trägerabschnitten 114 hin hergestellt werden.

Die Trägerplatte 113' weist ferner auf Seiten der Trägerabschnitte 114 zwei parallele, symmetrisch zu der Rotationsachse A angeordnet, radial möglichst weit außen gelegene, geradlinig und parallel zu ihrer Seitenkante verlaufende Dreiecksnuten 132 auf, welche formschlüssig in korrespondierende Vorsprünge der Trägerabschnitte 114 eingreifen können. So werden die Trägerabschnitte 114 in ihrer von der Trägerplatte 113' vorbestimmten und vorgegebenen Position, insbesondere der radialen Position, gehalten, zumindest teilweise zentriert, und es kann zudem formschlüssig ein Drehmoment übertragen werden. Allgemein kann durch einen Formschluss mit anderen Werkzeugkomponenten mit einem Spiel in eine speziell definierte Richtung durch die Trägerplatte 113' eine Wärmeausdehnung von anderen Werkzeugkomponenten gerichtet geführt werden. Beispielsweise kann die Trägerplatte 113' gerade Nuten und/oder geradlinige Erhebungen, insbesondere in Form einer Passfeder, aufweisen, so dass ein korrespondierender Vorsprung bzw. eine korrespondierende Führungsnut eine Bewegung aufgrund von Wärmedehnung in eine Richtung zulässt.

Auf Seiten der Spannabschnitts 24 weist die Trägerplatte 113' ebenfalls eine geradlinige Dreiecksnut 132 auf, welche durch die Rotationsachse A verläuft bzw. diese schneidet, vorzugsweise orthogonal zu den Schneiden 4 ausgerichtet ist und damit orthogonal zu den beiden Dreiecksnuten 132 auf Seiten der Trägerabschnitte 114 steht. Damit kann formschlüssig ein hohes Drehmoment von dem Spannabschnitt 24 auf die Trägerplatte 113' übertragen werden. Alternativ zu der Dreiecksnut 132 kann die Trägerplatte 113' auch eine Erhebung oder einen Vorsprung beispielsweise in Form einer Passfeder aufweisen, welche in eine korrespondierende Nut bzw. einen korrespondierenden Hinterschnitt des Spannabschnitts eingreift.

Um an einem Spannabschnitt dreh- und axialfest angebunden zu werden, weist die Trägerplatte 113' zusätzlich Durchgangsbohrungen 27 auf, welche umfänglich gleichverteilt um die Rotationsachse A angeordnet sind.

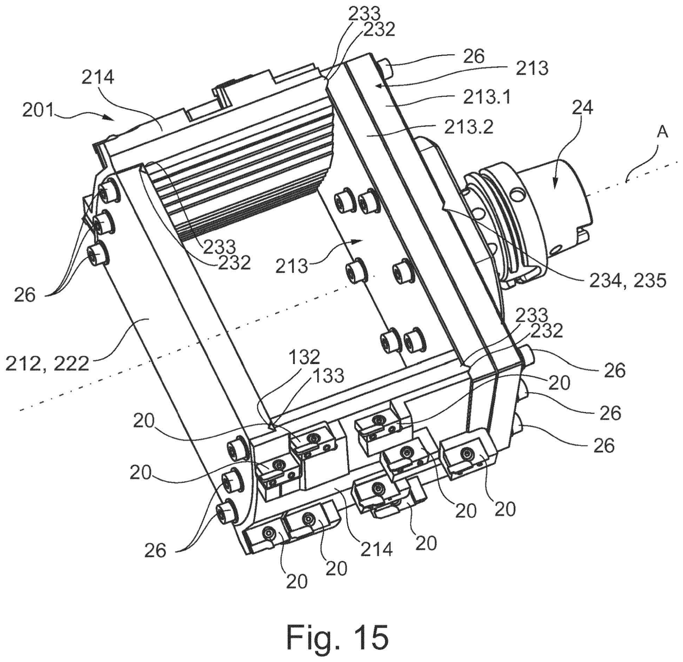

Figur 15 zeigt ein Rotationswerkzeug 201 gemäß einer zweiten nicht zur Erfindung gehörenden Ausführungsform. Das Rotationswerkzeug 201 weist in dieser zweiten nicht zur Erfindung gehörenden Ausführungsform eine flächige, im Wesentlichen rechteckförmige Stützplatte 222 als Versteifungsstruktur 212 sowie ein Trägerplattensystem 213 aus einer ersten und zweiten Trägerplatte 213.1, 213.2 auf. Die Stützplatte 222 weist eine konzentrisch zu der Rotationsachse A verlaufende Dreiecksnut 232 in Umfangsrichtung auf, welche in einen korrespondierenden konzentrischen Vorsprung 233 der Trägerabschnitte 214 in Umfangsrichtung formschlüssig eingreift, um formschlüssig zentriert und in radialer Richtung mit den Trägerabschnitten 214 formschlüssig verbunden zu sein. Der Vorsprung 233 erstreckt sich dabei in axialer Richtung bzw. die Dreiecksnut ist in axialer Richtung zurückgenommen. Auch in dieser zweiten nicht zur Erfindung gehörenden Ausführungsform ist die Stützplatte 222 in radialer Richtung von den beiden sich gegenüberliegenden Trägerabschnitten 214 eingefasst, wohingegen das Trägerplattensystem 213 einen axialen Versatz zu den Trägerabschnitten 214 aufweist und eine radial äußere Fläche des Rotationswerkzeugs 201 bildet.

Sowohl die Stützplatte 222 als auch das Trägerplattensystem 213 sind in axialer Richtung mit den Trägerabschnitten 214 mittels Schrauben 26 verschraubt, wobei die Schrauben 26 durch Durchgangsbohrungen der Stützplatte 222 als auch des Trägerplattensystems 213 (also durch Durchgangsbohrungen in der ersten und zweiten Trägerplatte 213.1, 231.2) hindurchstehen. Die Stützplatte 222 als auch das Trägerplattensystem 213 weisen als Material wieder Faser-Kunststoff-Verbund mit Kohlenstofffasern und/oder PBO-Fasern als Faserkomponente auf. Die dem Spannabschnitt 24 zugewandte Trägerplatte 213.1 weist auf Seiten des Spannabschnitts 24 eine weitere, orthogonal auf die Rotationsachse A stehende gerade Dreiecksnut 234 auf, deren Richtung der Ausnehmung die axiale Richtung ist, in welche ein komplementärer Dreiecks-Vorsprung 235 des Spannabschnitts 24 formschlüssig eingreift. Die Dreiecksnut 234 ist dabei so angeordnet bzw. gestaltet ist, dass sie symmetrisch zwischen den beiden Trägerabschnitten 214 liegt, um ein möglichst hohes Drehmoment auf die Schneiden 4 übertragen zu können. Mit anderen Worten liegt die gerade Dreiecksnut 234 in einer Symmetrieebene zwischen den Trägerabschnitten 114, wobei eine gedachte Verlängerung der geraden Dreiecksnut die Trägerabschnitte 114 nicht schneidet.

Bei Verwendung Faser-Kunststoff-Verbund mit insbesondere Kohlenstofffasern und/oder PBO-Fasern für großvolumige Werkzeugkomponenten, wie vorstehend beschrieben, kann eine Masse des Rotationswerkzeugs gegenüber einem Rotationswerkzeug, das fast vollständig Titan als Material aufweist, über 20% reduziert werden. Auch kann eine Wärmeausdehnung bei einer Temperaturänderung von 25K um knapp 30% gesenkt werden, wobei eine Radialaufweitung (aufgrund von Zentrifugalkräften) bei einem Betrieb des Rotationswerkzeugs dennoch konstant gehalten werden kann. Damit eignet sich eine Trägerstruktur, die Faser-Kunststoff-Verbund als Material aufweist, hervorragend für ein spanabhebendes Rotationswerkzeug zur Bearbeitung von großen Innendurchmessern. Das Rotationswerkzeug kann dadurch mit üblichen Spindeln verwendet werden und es müssen keine neuen Werkzeugmaschinen angeschafft werden.

Beispielsweise kann das Herstellungsverfahren des Faser-Kunststoff-Verbundes von der beschriebenen Variante dahingehend abweichen dass der Faser-Kunststoff-Verbund im 3D-Druck (additive Fertigung) hergestellt wird, wobei die Fasern beispielsweise als Endlosfasern bzw. Endlosfaser-Rovings in die zu druckende Matrix eingebettet werden. Dabei werden die Fasern mittels einer Positioniereinrichtung so platziert, dass diese während des Matrixaustrags bzw. Kunststoffaustrags direkt durch den ausgetragenen Kunststoff in das Bauteil bzw. die Werkzeugkomponente implementiert werden. So können beispielsweise Faser-Kunststoff-Verbund-Werkzeugkomponenten aus Granulat mit Endlosfasern additiv gefertigt werden. Die Werkzeugkomponenten können so Schicht für Schicht aus feinsten Kunststofftropfen mithilfe einer speziellen Düse auf einem beweglichen Bauteilträger aufgetragen und so zu 3D-Bauteilen aufgebaut werden.

Es wird an dieser Stelle darauf hingewiesen, dass der Begriff "schirmartig" unterschiedliche Formgebungen umfasst. Beispielsweise kann die Trägerstruktur, die sich ausgehend von dem dem Spannabschnitt benachbarten Kopplungsabschnitt schirmartig aufweitet, eine kreisförmige Außenkontur um die Rotationsachse aufweisen, auf der die zumindest Schneiden angeordnet ist. Alternativ kann die sich schirmartig aufweitende Trägerstruktur auch eine im Querschnitt gesehen (in Richtung der Rotationsachse A gesehen) rechteckförmige oder polygone Außenkontur haben. Insbesondere folgt die Innenkontur der Außenkontur der Trägerstruktur, das heißt, dass bei einer kreisförmigen Außenkontur, die Innenkontur ebenfalls kreisförmig gestaltet ist mit einem geringeren Durchmesser als die Außenkontur. Beispielsweise kann die Trägerstruktur in Form eines kreisförmigen Zylinders mit Boden (Topf-Form) oder in Form eines rechteckigen Hohlprofils mit Boden gestaltet sein. Natürlich kann die Außenkontur auch zumindest segmentweise kreisförmig mit segmentweise entsprechend gleichem Radius gestaltet sein. Insbesondere kann die Innenkontur zumindest segmentweise geradlinig gestaltet sein. Vorzugsweise kann die sich schirmartig erweiternde Trägerstruktur in einer Seitenansicht ein U- oder C-Profil aufweisen.

Ebenfalls wird darauf hingewiesen, dass alternativ die zumindest eine Schneide auch mittelbar oder unmittelbar an der radialen Außenseite der Versteifungsstruktur, ausgebildet bzw. angeordnet sein kann. Das über den Spannabschnitt eingebrachte Drehmoment wird weiterhin über die Trägerstruktur, die dreh- und axialfest mit der Versteifungsstruktur verbunden ist, auf die zumindest eine Schneide übertragen. Insbesondere ist die zumindest eine Schneide in unmittelbarer Nachbarschaft zu der Trägerstruktur ausgebildet.

**Bezugszeichen**

| | |
|---|---|
| 1; 101; 201 | Rotationswerkzeug |
| 2 | Außenumfang |
| 4 | Schneide |
| 5 | Schneidkörper |
| 6 | Schneidkreis |
| 8 | Schneidkreis-Durchmesser |
| 10; 110; 210 | Trägerstruktur |
| 11 | Kopplungsabschnitt |
| 12; 112; 212 | Versteifungsstruktur |
| 13 | Wand |
| 14; 114; 214 | Trägerabschnitt |
| 16 | Radiale Außenfläche |
| 18 | Blockförmiger Vorsprung |
| 19 | Schneidstufe |
| 20 | Kassette |
| 22 | Streben |
| 22.1 | Verbindungs-Streben |
| 22.2 | Versteifungs-Strebe |
| 22.3 | Axial-Strebe |
| 24 | Spannabschnitt |
| 25 | Flansch |
| 26 | Schrauben |
| 27 | Durchgangsbohrung |
| 28 | Blockabsatz |
| 30 | Kanal |
| 113; 113' | Trägerplatte |
| 122; 222 | Stützplatte |
| 123 | Seitenplatte |
| 128 | Kühlkanal |
| 129 | Madenschraube |
| 130 | Einlass |
| 131 | Auslass |
| 132; 232 | Dreiecksnut |
| 134 | Umlaufender Hinterschnitt / Nut |
| 136 | Anschlag |
| 138 | Sockel |
| 140 | Ausnehmung |
| 213 | Trägerplattensystem |
| 213.1 | Erste Trägerplatte |
| 213.2 | Zweite Trägerplatte |
| 222 | Stützplatte |
| 233 | Vorsprung |

**Patentansprüche**

1. Rotationswerkzeug (1) zur spanenden Bearbeitung von großen Innendurchmessern, an dessen Außenumfang (2) zumindest eine Schneide (4) angeordnet ist, mit einer Trägerstruktur (10), die die zumindest eine Schneide (4) mittelbar oder unmittelbar trägt, und mit einem Spannabschnitt (24) zur Ankopplung an eine Werkzeugaufnahme, **dadurch gekennzeichnet, dass** sich die Trägerstruktur (10) ausgehend von einem dem Spannabschnitt (24) benachbarten Kopplungsabschnitt (11) schirmartig aufweitet und durch eine Versteifungsstruktur (12) radial versteift ist und dass die Trägerstruktur (10) zumindest zwei in Bezug auf eine Rotationsachse (A) des Rotationswerkzeugs (1) diametral gegenüberliegende Trägerabschnitte (14) aufweist, die jeweils zumindest eine Schneide (4) mittelbar oder unmittelbar tragen und die die Versteifungsstruktur (12) miteinander verbindet, wobei die Versteifungsstruktur (12) in Form eines Zug-/Druck-Strebengerüsts und, in axialer Richtung gesehen, gitterartig ausgebildet ist, wobei die Versteifungsstruktur (12) drei Verbindungs-Streben (22.1), die in einer Ebene orthogonal zu der Rotationsachse (A) und parallel zueinander verlaufen und die Trägerabschnitte (14) miteinander verbinden, und eine die Verbindungs-Streben (22.1) senkrecht schneidende und mittig zwischen den Trägerabschnitten (14) angeordnete Versteifungsstrebe (22.2) zur Versteifung aufweist.

**2.** Rotationswerkzeug (1) nach Anspruch 1, **dadurch gekennzeichnet, dass** zumindest die Trägerstruktur (10) generativ hergestellt ist.

**3.** Rotationswerkzeug (1) nach einem der vorangegangenen Ansprüche, **dadurch gekennzeichnet, dass** die Trägerstruktur (10) einen Wärmeausdehnungskoeffizienten von unter 10E-6 1/K aufweist.

**4.** Rotationswerkzeug (1) nach einem der vorangegangenen Ansprüche, **dadurch gekennzeichnet, dass** die schirmartig ausgebildete Trägerstruktur (10) in Form eines Topfes mit zwei in axialer Richtung abgeschnittenen Seiten gestaltet ist, wodurch sich zwei Flanken der Trägerstruktur (10) ergeben.

**5.** Rotationswerkzeug (1) nach einem der vorangegangenen Ansprüche, **dadurch gekennzeichnet, dass** die Trägerstruktur (10) punktsymmetrisch zu der Rotationsachse (A) des Rotationswerkzeug (1) ausgebildet ist.

**6.** Rotationswerkzeug (1) nach einem der vorangegangenen Ansprüche, **dadurch gekennzeichnet, dass** das Rotationswerkzeug (1) dafür angepasst ist, einen Innendurchmesser von über 200mm und/oder einen Innendurchmesser mit einer Länge bis zu 400mm zu bearbeiten.

**7.** Rotationswerkzeug (1) nach einem der vorangegangenen Ansprüche, **dadurch gekennzeichnet, dass** die Trägerstruktur (10) in Axialrichtung zumindest in eine erste und eine zweiten Schneidstufe (19) unterteilt ist, die jeweils zumindest eine Schneide (4) tragen, wobei sich ein Schneidkreis-Durchmesser (8) der ersten Schneidstufe (19) von dem der zweiten Schneidstufe (19) unterscheidet.

**Claims**

**1.** A rotary tool (1) for cutting large inside diameters at the outer circumference (2) of which at least one cutting edge (4) is arranged, comprising a support structure (10) which indirectly or directly supports the at least one cutting edge (4), and comprising a chucking portion (24) for coupling to a tool holder, **characterized in that** the support structure (10) widens in an umbrella-type manner starting from a coupling portion (11) adjacent to the chucking portion (24) and is radially stiffened by a stiffening structure (12), and that the support structure (10) includes at least two support portions (14) diametrically opposed with respect to an axis of rotation (A) of the rotary tool (1), wherein the support portions indirectly or directly support at least one respective cutting edge (4) and which are connected to each other by the stiffening structure (12), wherein the stiffening structure (12) is in the form of a tension-compression strut frame and is lattice-shaped when viewed in the axial direction, wherein the stiffening structure (12) includes three connecting struts (22.1) arranged in parallel to each other and which interconnect the support portions (14), and a stiffening strut (22.2) vertically intersecting the connecting struts (22.1) and being arranged centrally between the support portions (14) for stiffening.

**2.** The rotary tool (1) according to claim 1, **characterized in that** at least the support structure (10) is generatively manufactured.

**3.** The rotary tool (1) according to one of the preceding claims, **characterized in that** the support structure (10) has a thermal expansion coefficient of less than 10E-6 1/K.

**4.** The rotary tool (1) according to one of the preceding claims, **characterized in that** the umbrella-type support structure (10) is configured in the form of a cup having two sides cut off in the axial direction, thus resulting in two flanks of the support structure (10).

**5.** The rotary tool (1) according to one of the preceding claims, **characterized in that** the support structure (10) is formed to be point-symmetrical to the axis of rotation (A) of the rotary tool (1).

**6.** The rotary tool (1) according to one of the preceding claims, **characterized in that** the rotary tool (1) is adapted to cut an inside diameter of more than 200 mm and/or to cut an inside diameter having a length of up to 400 mm.

7. The rotary tool (1) according to one of the preceding claims, **characterized in that** in the axial direction the support structure (10) is divided at least into a first and a second cutting step (19) each of which supports at least one cutting edge (4), with a cutting circle diameter (8) of the first cutting step (19) being different from that of the second cutting step (19).

**Revendications**

1. Outil rotatif (1) pour l'usinage par enlèvement de copeaux de grands diamètres intérieurs, sur la périphérie extérieure (2) duquel est agencé au moins un tranchant (4), avec une structure de support (10) qui porte directement ou indirectement le au moins un tranchant (4), et avec une section de serrage (24) pour le couplage à un porte-outil, **caractérisé en ce que** la structure de support (10) s'élargit à partir d'une section de couplage (11) voisine de la section de serrage (24) à la manière d'un parapluie et est rigidifiée radialement par une structure de renforcement (12) et **en ce que** la structure de support (10) présente au moins deux sections de support (14) diamétralement opposées par rapport à un axe de rotation (A) de l'outil rotatif (1), qui portent chacune directement ou indirectement au moins un tranchant (4) et que la structure de raidissement (12) relie entre elles, dans lequel la structure de renforcement (12) est réalisée sous la forme d'une structure d'entretoise de traction/compression et, vue dans la direction axiale, est réalisée sous forme de grille, dans lequel la structure de renforcement (12) présente trois entretoises de liaison (22.1) qui s'étendent dans un plan orthogonal à l'axe de rotation (A) et parallèlement les unes aux autres et relient les sections de support (14) entre elles, et une entretoise de renforcement (22.2) coupant perpendiculairement les entretoises de liaison (22.1) et agencée au milieu entre les sections de support (14) pour le renforcement.

2. Outil rotatif (1) selon la revendication 1, **caractérisé en ce qu'**au moins la structure de support (10) est fabriquée de façon générative.

3. Outil rotatif (1) selon l'une quelconque des revendications précédentes, **caractérisé en ce que** la structure de support (10) présente un coefficient de dilatation thermique inférieur à 10E-6 1/K.

4. Outil rotatif (1) selon l'une quelconque des revendications précédentes, **caractérisé en ce que** la structure de support (10) réalisée en forme de parapluie est configurée sous la forme d'un pot avec deux côtés coupés dans la direction axiale, ce qui permet d'obtenir deux flancs de la structure de support (10).

5. Outil rotatif (1) selon l'une quelconque des revendications précédentes, **caractérisé en ce que** la structure de support (10) est réalisée en symétrie ponctuelle par rapport à l'axe de rotation (A) de l'outil rotatif (1).

6. Outil rotatif (1) selon l'une quelconque des revendications précédentes, **caractérisé en ce que** l'outil rotatif (1) est adapté pour usiner un diamètre intérieur supérieur à 200 mm et/ou un diamètre intérieur d'une longueur allant jusqu'à 400 mm.

7. Outil rotatif (1) selon l'une quelconque des revendications précédentes, **caractérisé en ce que** la structure de support (10) est divisée dans la direction axiale en au moins un premier et un second étage de coupe (19), qui portent chacun au moins un tranchant (4), dans lequel un diamètre de cercle de coupe (8) du premier étage de coupe (19) est différent de celui du second étage de coupe (19).

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20110188954 A1
- US 20100183382 A1
- DE 102017118604 A1
- US 20150190867 A1
- US 20140161543 A1